# EUROPEAN PATENT SPECIFICATION

(11) **EP 4 590 737 B1**
(45) Date of publication and mention of the grant of the patent: **29.04.2026**
(21) Application number: 23786133.1
(22) Date of filing: 20.09.2023
(51) Int. Cl.: C08G 77/04, A61M 16/06, B29C 45/00, B29C 45/14, B29C 45/16, C08G 77/12, C08G 77/20, C08L 67/00, C08L 69/00, C08L 77/06, C08L 83/04

(54) **COMPOSITION AND ARTICLE INCLUDING A THERMOPLASTIC AND A BRANCHED SILSESQUIOXANE POLYMER AND RELATED PROCESS**
THERMOPLASTISCHE UND VERZWEIGTEN SILSESQUIOXANPOLYMER ENTHÄLTENDE ZUSAMMENSETZUNG, ARTIKEL DAMIT UND HERSTELLUNGSVERFAHREN DAFÜR
COMPOSITION ET ARTICLE COMPRENANT UN POLYMÈRE THERMOPLASTIQUE ET UN POLYMÈRE DE SILSESQUIOXANE RAMIFIÉ ET PROCÉDÉ D'OBTENTION DE CELUI-CI

(30) Priority: 20.09.2022 US 202263408226 P
(43) Date of publication of application: 30.07.2025
(73) Proprietor: 3M Innovative Properties Company, Saint Paul, Minnesota 55133-3427 (US)
(72) Inventor: SUBRAMANIAM, Ramnath, Saint Paul, Minnesota 55133-3427 (US); JARIWALA, Chetan P., Saint Paul, Minnesota 55133-3427 (US); WARNER, Joseph S., Saint Paul, Minnesota 55133-3427 (US); SVENDSEN, Michael J., Saint Paul, Minnesota 55133-3427 (US)
(74) Representative: Bergen, Katja
(86) International application number: PCT/IB2023/059298
(87) International publication number: WO 2024/062392

(56) References cited:
- WO-A1-2021/037768
- WO-A1-2021/046266
- US-A1- 2020 291 277

## Description

### Background

Articles made from dissimilar materials may be useful for a variety of purposes. Dissimilar materials can be difficult to adhere together. Components of various apparatus and devices are often molded (e.g., injection-molded). In some instances, different materials may be co-molded, overmolded, or insert-molded, for example, to produce a composite article. U.S. Pat. Appl. Pub. No. 2021-0147677 (Subramaniam et al.) reports a comparative example of a dual-molded article in which a molded polyamide piece could be separated from an overmolded silicone piece with a minimum of force (e.g., by hand with trivial effort).

Branched silsesquioxane polymers having ethylenically unsaturated groups are described, for example, in U.S. Pat. Nos. 9,453,109; 9,725,561; 9,957,358; 10,066,123; and 10,597,557, each to Rathore. A pressure sensitive adhesive composition including a branched silsesquioxane polymer having ethylenically unsaturated groups is described in U.S. Pat. No. 10,392,538 (Chatterjee et al.). An article comprising a fluoropolymer in contact with a silicone, wherein at least one of the fluoropolymer or the silicone is crosslinked with a branched silsesquioxane polymer is described in Int. Pat. Appl. Pub. No. WO 2021/046266 (Mitchell et al.). Int.Pat. Appl. Pub. No WO 2021/046266 describes a composition comprising a fluoropolymer and a branched silsesquioxane polymer having terminal -Si(R)₃ groups and siloxy units having groups comprising an aliphatic carbon-carbon double bond, wherein R is a non-hydrolysable group or hydrogen. The composition is used for the manufacture of an article comprising a first composition comprising a fluoropolymer in contact with a second composition comprising a silicone, wherein at least one of the first or second composition comprises the branched silsesquioxane polymer.

Int. Pat. Appl. Pub. No WO 2021/037768 relates to a process for the manufacture of a sealing member for a respiratory interface device, wherein the process comprises the steps of injecting a polymer through a polymer injection port into the cavity of a mould and forming a sealing member of the respiratory interface device. In particular, the process also includes a step wherein a second polymer is introduced into an injection port in order to form a sealing member having two different polymeric material (dual-injection moulding). The first polymer may be a polycarbonate material, the second polymer may be a liquid silicone rubber.

Finally U.S. Pat. No US 2020/291277 describes a composition comprising a polyisobutylene-containing polymer and a curable silsesquioxane additive. The silsesquioxane additive may have a linear, caged or branched structure and comprises functional organic groups such as acrylate or vinyl groups.

### Summary

The present disclosure provides compositions and articles that include a non-fluorinated thermoplastic that includes a branched silsesquioxane polymer. The presence of the branched silsesquioxane polymer in the non-fluorinated thermoplastic can advantageously and unexpectedly improve the adhesion between the non-fluorinated thermoplastic and a silicone.

In one aspect, the present disclosure provides a composition that includes a non-fluorinated thermoplastic and a branched silsesquioxane polymer having terminal -Si(R³)₃ groups and units represented by formula: 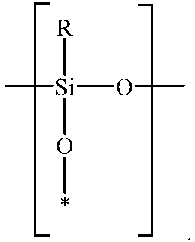 In this formula, * represents a bond to another silicon atom in the branched silsesquioxane polymer, each R is independently an organic group including an aliphatic carbon-carbon double bond, and each R³ is independently a non-hydrolyzable group with the proviso that one R³ may be hydrogen.

In another aspect, the present disclosure provides an article including a first composition containing a non-fluorinated thermoplastic in contact with a second composition containing a silicone. At least the first composition includes a branched silsesquioxane polymer having terminal -Si(R³)₃ groups and units represented by formula: 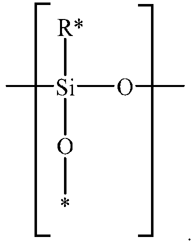 In this formula, * represents a bond to another silicon atom in the branched silsesquioxane polymer, each R* is independently an organic group including an aliphatic carbon-carbon double bond or an organic group including at least one of a carbon-silicon bond or carbon-carbon bond between the branched silsesquioxane polymer and the silicone or another R* group in the branched silsesquioxane polymer, and each R³ is independently a non-hydrolyzable group with the proviso that one R³ may be hydrogen.

In another aspect, the present disclosure provides a process for making a dual-molded article. The process includes molding the composition (or first composition) described above to form a first molded piece and molding a thermosetting, hydrosilylation-curable silicone polymer to form a second molded piece while a portion of a surface of the silicone polymer is in contact with a portion of a surface of the first molded piece. During the molding of the second molded piece, the portion of the surface of the silicone polymer that is in contact with the portion of the surface of the first molded piece forms at least one of a carbon-silicon bond or carbon-carbon bond with the branched silsesquioxane polymer in the first molded piece.

In this application:
Terms such as "a", "an" and "the" are not intended to refer to only a singular entity but include the general class of which a specific example may be used for illustration. The terms "a", "an", and "the" are used interchangeably with the term "at least one".

The phrase "comprises at least one of' followed by a list including the conjunction "or" refers to comprising any one of the items in the list or any combination of two or more items in the list. The phrase "at least one of' followed by a list including the conjunction "or" refers to any one of the items in the list or any combination of two or more items in the list.

The term "aliphatic" refers to being non-aromatic. This term is used to encompass alkyl, alkenyl, and alkynyl groups, for example.

The term "alkyl" refers to a monovalent group that is a radical of an alkane and includes straight-chain, branched, cyclic, and bicyclic alkyl groups, and combinations thereof, including both unsubstituted and substituted alkyl groups. Unless otherwise indicated, the alkyl groups typically contain from 1 to 30 carbon atoms. In some embodiments, the alkyl groups contain 1 to 20 carbon atoms, 1 to 10 carbon atoms, 1 to 6 carbon atoms, 1 to 4 carbon atoms, or 1 to 3 carbon atoms. Cyclic groups can be monocyclic or polycyclic and typically have from 3 to 10 ring carbon atoms. Examples of "alkyl" groups include methyl, ethyl, n-propyl, n-butyl, n-pentyl, isobutyl, t-butyl, isopropyl, n-octyl, n-heptyl, ethylhexyl, cyclopentyl, cyclohexyl, cycloheptyl, adamantyl, and norbornyl.

The term "alkylene" is the divalent or trivalent form of the "alkyl" groups defined above.

The term "aryl" refers to a monovalent group that is aromatic and, optionally, carbocyclic. The aryl has at least one aromatic ring. Any additional rings can be unsaturated, partially saturated, saturated, or aromatic. Optionally, the aromatic ring can have one or more additional carbocyclic rings that are fused to the aromatic ring. Unless otherwise indicated, the aryl groups typically contain from 6 to 30 carbon atoms and optionally contain at least one heteroatom (i.e., O, N, or S). In some embodiments, the aryl groups contain 6 to 20, 6 to 18, 6 to 16, 6 to 12, or 6 to 10 carbon atoms. Examples of an aryl group include phenyl, naphthyl, biphenyl, phenanthryl, anthracyl, and pyridinyl.

The term "arylene" is the divalent form of the "aryl" groups defined above.

The terms "cure" and "curable" refer to joining polymer chains together by covalent chemical bonds, usually via crosslinking molecules or groups, to form a network polymer. Therefore, in this disclosure the terms "cured" and "crosslinked" may be used interchangeably. A cured or crosslinked polymer is generally characterized by insolubility but may be swellable in the presence of an appropriate solvent.

The term "catenated heteroatom" means an atom other than carbon (for example, oxygen, nitrogen, or sulfur) that replaces one or more carbon atoms in a carbon chain (for example, so as to form a carbon-heteroatom-carbon chain or a carbon-heteroatom-heteroatom-carbon chain).

The phrase "alkylene interrupted by", for example, at least one catenated -O- refers to having part of the alkylene group on both sides of the at least one catenated -O-. For example, -CH₂CH₂-O-CH₂-CH₂-is an alkylene group interrupted by an -O-.

The term "(meth)acrylate group" is a functional group that refers to an acrylate group of the formula CH_{Z}=CH-C(O)O- and a methacrylate group of the formula CH₂=C(CH₃)-C(O)O-.

The term "halogen" refers to a halogen atom or one or more halogen atoms, including chlorine, bromine, iodine, and fluorine atoms or fluoro, chloro, bromo, or iodo substituents.

The term "non-fluorinated" means not including a fluorine atom.

The term "thermoplastic" refers to a type of plastic made up of a polymer resin or resins that softens when heated and hardens when cooled. Generally, thermoplastics are able to repeat these processes several times without a change in composition or properties. Accordingly, thermoplastics are not "curable" and are not crosslinked. Thermoplastics can often be melted by the application of heat and can be processed in the liquid state (e.g., by extrusion and injection molding). The term "thermoplastic" as used herein does not include pressure sensitive adhesives.

A silsesquioxane is an organosilicon compound with the empirical chemical formula R'SiO3/2 where Si is the element silicon, O is oxygen and R' is either hydrogen or an aliphatic or aromatic organic group that optionally further comprises an ethylenically unsaturated group. Thus, silsesquioxane polymers comprise silicon atoms bonded to three oxygen atoms. Silsesquioxane polymers that have a random branched structure are typically liquids at room temperature. Silsesquioxane polymers that have a non-random structure like cubes, hexagonal prisms, octagonal prisms, decagonal prisms, and dodecagonal prisms are typically solids at room temperature. The branched silsesquioxane polymers in the compositions and articles of the present disclosure exclude cage structures (e.g., cubes, hexagonal prisms, octagonal prisms, decagonal prisms, and dodecagonal prisms). It is possible that the silsesquioxane of the present disclosure may include some six- or eight-membered siloxane rings and/or some ladder structure, that is, a structure of fused cyclic siloxanes. However, in some embodiments, the number of silicon atoms in rings in the silsesquioxane of the present is not more than 25, 20, 15, 10, 5, 1, or 1 percent, based on the total number of silicon atoms in the silsesquioxane, as determined by nuclear magnetic resonance spectroscopy. The branched silsesquioxane can also be free of ladder structure.

All numerical ranges are inclusive of their endpoints and nonintegral values between the endpoints unless otherwise stated (e.g., 1 to 5 includes 1, 1.5, 2, 2.75, 3, 3.80, 4, 5, etc.).

### Brief Description of the Drawings

FIG. 1 is a depiction of the structure of an embodiment of the branched silsesquioxane polymer useful in the composition, article, and method of the present disclosure.
FIG. 2 is a side schematic cross-sectional view of a portion of an embodiment of an article of the present disclosure.
FIG. 3 is a perspective view of an embodiment of a respirator.
FIG. 4 is a perspective view of an embodiment of an article of the present disclosure including a facepiece body and a sealing element of a respirator.

Like reference numbers in the various figures indicate like elements. Some elements may be present in identical or equivalent multiples. In such cases only one or more representative elements may be designated by a reference number, but it will be understood that such reference numbers apply to all such identical elements. Unless otherwise indicated, all figures and drawings in this document are not to scale and are chosen for the purpose of illustrating various embodiments. In particular, the dimensions of the various components are depicted in illustrative terms only, and no relationship between the dimensions of the various components should be inferred from the drawings, unless so indicated.

### Detailed Description

The branched silsesquioxane polymer useful in the composition, article, and process of the present disclosure includes terminal -Si(R³)₃ groups and units represented by formula 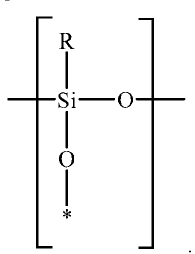 In this formula, * represents a bond to another silicon atom in the branched silsesquioxane polymer, and each R is independently an organic group comprising an aliphatic carbon-carbon double bond. Each R³ in the terminal groups is independently a non-hydrolyzable group with the proviso that one R³ may be hydrogen.

In some embodiments, each R is independently represented by -Y-Z, wherein Y is a bond, alkylene, arylene, or alkylene at least one of interrupted or terminated by arylene, wherein alkylene and alkylene at least one of interrupted or terminated by arylene are unsubstituted or substituted with halogen and optionally interrupted by at least one catenated -O-, -NR'-, -S-, -Si-, or combination thereof, and wherein arylene is unsubstituted or substituted by at least one alkyl, alkoxy, halogen, or combination thereof, wherein R' is hydrogen or alkyl having up to four carbon atoms. In some embodiments, Y is a bond, an alkylene group having from 1 to 20, 1 to 6, 1 to 4, 1 to 3, 1 to 2, or 1 carbon atom, phenylene, or an alkylene group having from 1 to 6, 1 to 4, or 1 to 3 carbon atoms interrupted by phenylene (e.g., methylphenylpropyl). In formula -Y-Z, Z is vinyl (i.e., -CH=CH₂), vinyl ether (i.e., -O-CH=CH₂), acryloyloxy (i.e., --C(O)-CH=CH₂), methacryloyloxy (i.e., -O-C(O)-C(CH₃)=CH₂), acryloylamino (i.e., -NR'-C(O)-CH-CH₂ wherein R' is hydrogen or alkyl having up to four carbon atoms), or methacryloylamino group (i.e., -NR'-C(O)-C(CH₃)=CH₂, wherein R' is hydrogen or alkyl having up to four carbon atoms). When Y is alkylene and Z is a vinyl group, Y-Z is an alkenyl group. Such alkenyl group may have the formula (H₂C=CH(CH₂)_{y}- wherein y is 1 to 20, 1 to 6, 1 to 4, 1 to 3, 1 to 2, or 1). The alkenyl group can be 3-butenyl, docosenyl, or hexenyl, for example. In some embodiments, -Y-Z is allyl (i.e., -CH₂-CH=CH₂); that is, Y is -CH₂-, and Z is vinyl. In some embodiments, -Y-Z is vinyl (i.e., -CH=CH₂); that is, Y is a bond, and Z is vinyl.

The article of the present disclosure or made by the process of the present disclosure includes units represented by formula 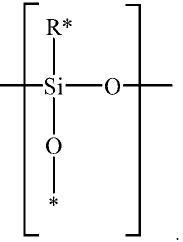 In this formula, * represents a bond to another silicon atom in the branched silsesquioxane polymer; and each R* is independently an organic group comprising an aliphatic carbon-carbon double bond as described above in any of its embodiments or an organic group comprising at least one of a carbon-silicon bond or carbon-carbon bond between the branched silsesquioxane polymer and the silicone or another R* group in the branched silsesquioxane polymer. Carbon-carbon double bonds in two R groups described above can react to form carbon-carbon bonds. Upon reacting, in the R group in the branched silsesquioxane polymer, described above, the aliphatic carbon-carbon double bond forms at least one of a carbon-silicon bond or carbon-carbon bond between the branched silsesquioxane polymer and the silicone or another R* group in the branched silsesquioxane polymer. Silicones described in further detail below can react with the carbon-carbon double bond of the branched silsesquioxane polymer described above to provide the carbon-carbon bond or the carbon-silicon bond. In embodiments in which the R* group is represented by -Y-Z, -Y-Z can be as defined above in any of its embodiments or a reaction product thereof including the carbon-carbon bond or carbon-silicon bond. R* may consist of the carbon-carbon bond or carbon-silicon bond between the branched silsesquioxane polymer and the silicone or another R* group, or R* can optionally further include alkylene, arylene, or alkylene at least one of interrupted or terminated by arylene, -O-, -NR'-, -O-C(O)-, -NR'-C(O)-, -S-, -Si-, or a combination thereof, wherein R' is hydrogen or alkyl having up to four carbon atoms, and optionally substituted by halogen and, in the case of arylene, optionally substituted by alkyl or alkoxy. In some embodiments, R* is the carbon-carbon bond or carbon-silicon bond optionally bonded to -(CH₂)_{y}-, wherein y is 1 to 6, 1 to 4, 1 to 3, 1 to 2, or 1.

In some embodiments, the branched silsesquioxane polymer useful in the composition, article, and process of the present disclosure includes units represented by formula: 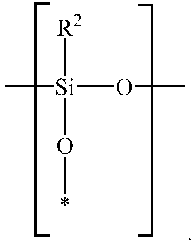 In this formula, * represents a bond to another silicon atom in the branched silsesquioxane polymer, and each R² is independently a hydrogen or a non-hydrolyzable group not comprising an aliphatic carbon-carbon double bond. As stated above, each R³ in the terminal groups is independently a non-hydrolyzable group with the proviso that one R³ may be hydrogen.

Suitable non-hydrolyzable groups useful as R² and R³ substituents include alkyl, aryl, alkylene at least one of interrupted or terminated by arylene or heterocyclylene, wherein alkyl and alkylene at least one of interrupted or terminated by arylene or heterocyclylene are unsubstituted or substituted with halogen and optionally interrupted by at least one catenated -O-, -NR'-, -S-, -Si-, or combination thereof, and wherein aryl, arylene, and heterocyclylene are unsubstituted or substituted by at least one alkyl, alkoxy, halogen, or combination thereof. R² and R³ non-hydrolyzable groups are selected independently from each other. In some embodiments, R² and R³ are non-fluorinated.

In some embodiments, each R³ is independently hydrogen, alkyl, or aryl. Typically, only one R³ is hydrogen. Suitable alkyl groups for R³ typically have 1 to 20, 1 to 18, 1 to 12, 1 to 10, 1 to 6, or 1 to 4 carbon atoms. Examples of useful alkyl groups include methyl, ethyl, isopropyl, n-propyl, n-butyl, and iso-butyl. In some embodiments, each R³ is independently alkyl having up to six (in some embodiments, up to 4, 3, or 2) carbon atoms, phenyl, benzyl, or C₆H₅C₂H₄-. In some embodiments, each R³ is independently methyl or phenyl. In some embodiments, each R³ is methyl.

In some embodiments, each R² is independently hydrogen, alkyl, or aryl. Suitable alkyl groups for R² typically have 1 to 20, 1 to 18, 1 to 12, 1 to 10, 1 to 6, or 1 to 4 carbon atoms. Examples of useful alkyl groups include methyl, ethyl, isopropyl, n-propyl, n-butyl, iso-butyl, and octadecyl. In some embodiments, each R² is independently alkyl having up to 18 (in some embodiments, up to 4, 3, or 2) carbon atoms, phenyl, benzyl, or C₆H₅C₂H₄-. In some embodiments, each R² is independently methyl, phenyl, or octadecyl. In some embodiments, each R² is independently methyl or phenyl. In some embodiments, each R² is methyl.

In some embodiments, the branched silsesquioxane polymer useful in the composition and process of the present disclosure is represented by formula: 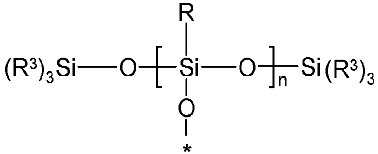 wherein *, R, and R³ are independently as defined above in any of their embodiments, and wherein n is at least 2. In some embodiments, n is at least 3, 4, 5, 6, 7, 8 or 9. In the article of the present disclosure, R may be R*, as defined above.

In some embodiments, the branched silsesquioxane polymer useful in the composition and process of the present disclosure is represented by formula: 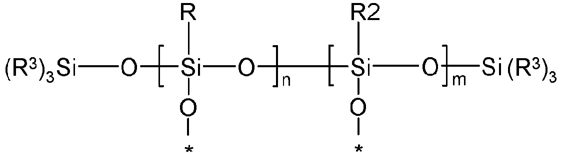 wherein *, R, R², and R³ are independently as defined above in any of their embodiments, and n+m is greater than 3. Although this formula is shown as a block copolymer, it should be understood that the divalent units including R and R² can be randomly positioned in the copolymer. Thus, branched silsesquioxane polymers useful for practicing the present disclosure also include random copolymers. In some embodiments, m is at least 1, 2, 3, 4, 5, 6, 7, 8, 9 and the sum of n + m is 3 or greater than 3. In some embodiments, n, m, or n+m is at least 10, 15, 20, 25, 30, 35, 40, 45, or 50. In some embodiments, n or m is not more than 500, 450, 400, 350, 300, 250, or 200. Thus, n+m can range up to 1000. In some embodiments, n+m is an integer of not more than 175, 150, or 125. In some embodiments, n and m are selected such the copolymer comprises at least 25, 26, 27, 28, 29, or 30 mol% of repeat units including R groups. In some embodiments, n and m are selected such the copolymer comprises not more than 85, 80, 75, 70, 65, or 60 mol% of repeat units including R groups. In the article of the present disclosure, R may be R*, as defined above.

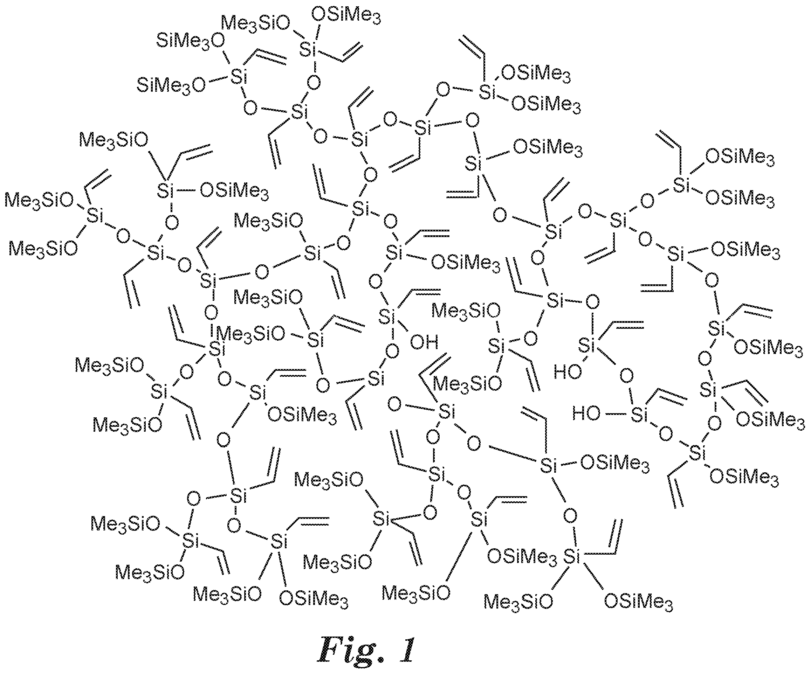

In some embodiments, each R is vinyl. In one naming convention, the R³ group is included in the name of the polymer. An example of a branched silsesquioxane polymer end-capped with ethoxytrimethylsilane is trimethylsilyl poly(vinylsilsesquioxane). The three-dimensional branched network structure of this polymer can be depicted as shown in FIG. 1. An example of a branched silsesquioxane polymer end-capped with triphenylethoxysilane is triphenylsilyl poly(vinylsilsesquioxane).

In some embodiments, R is Y-Z, wherein Y-Z is allyl, allylphenylpropyl, 3-butenyl, docosenyl, or hexenyl, and the branched silsesquioxane polymer is trimethylsilyl poly(allylsilsesquioxane). trimethylsilyl poly(allylphenylpropylsilsesquioxane), trimethylsilyl poly(3-butenylsilsesquioxane), trimethylsilyl poly(docosenyl silsesquioxane), or trimethylsilyl poly(hexenylsilsesquioxane). Examples of other useful branched silsesquioxane polymers include trimethylsilyl vinyl-co-phenyl silsesquioxane, trimethylsilyl vinyl-co-methyl silsesquioxane, trimethylsilyl vinyl-co-octadecyl silsesquioxane, trimethylsilyl vinyl-co-hydro silsesquioxane, trimethylsilyl allyl-co-phenyl silsesquioxane, trimethylsilyl allyl-co-methyl silsesquioxane, trimethylsilyl allyl-co-octadecyl silsesquioxane, and trimethyl silyl allyl-co-hydro silsesquioxane. In some embodiments, the branched silsesquioxane polymer is any of silsesquioxanes above end-capped with triphenylsilyl instead of trimethylsilyl.

In some embodiments, the branched silsesquioxane polymer useful in the composition, article, and process of the present disclosure is free of hydrolyzed groups such as -OH group. In some embodiments, the number of hydrolyzed groups (e.g. -OH groups) is not more than 15, 10, or 5 wt.%. In some embodiments, the number of hydrolyzed groups (e.g. -OH groups) is not more than 4, 3, 2 or 1 wt.%. The branched silsesquioxane polymer and compositions of the present disclosure can exhibit improved shelf life and thermal stability in comparison to silsesquioxane polymers having higher concentrations of -OH groups.

The branched silsesquioxane polymer useful in the composition, article, and process of the present disclosure can be prepared by hydrolysis and condensation of a compound having the formula R-Si(R¹)₃ and optionally a compound having the formula R²-Si(R¹)₃, wherein R and R² are as defined above in any of their embodiments, and R¹ is a hydrolyzable group. The term "hydrolyzable group" refers to a group that can react with water under conditions of atmospheric pressure. The reaction with water may optionally be catalyzed by acid or base. Suitable hydrolyzable groups include halogen (e.g., iodo, bromo, chloro); alkoxy (e.g., -O-alkyl), aryloxy (e.g., -O-aryl), acyloxy (e.g., -O-C(O)-alkyl), amino (e.g., -N(R^{A})(R^{B}), wherein each R^{A} or R^{B} is independently hydrogen or alkyl), polyalkyleneoxy; and oxime (e.g., -O-N=C-(R^{A})(R^{B}). In some embodiments, each R¹ is independently halogen or alkoxy optionally substituted by halogen. In some embodiments, each R¹ is independently chloro or alkoxy having up to 12 (or up to 6 or 4) carbon atoms. In some embodiments, each R¹ is independently methoxy or ethoxy.

When the compounds of formula R-Si(R¹)₃ and optionally R²-Si(R¹)₃ react, R¹ is converted to a hydrolyzed group, such as -OH, during hydrolysis. The Si-OH groups react with each other to form silicone-oxygen linkages such that the majority of silicon atoms are bonded to three oxygen atoms. After hydrolysis, the -OH groups are further reacted with an end-capping agent to convert the hydrolyzed group, e.g. -OH, to -OSi(R³)₃. Suitable end-capping agents include those having formulas R¹-Si(R³)₃ and O[Si(R³)₃]₂, for example. The silsesquioxane polymer comprises terminal groups having the formula -Si(R³)₃ wherein R³ is as defined above in any of its embodiments, after end-capping. Hydrolysis and condensation can be carried out by conventional methods, for example, by heating the compound of formula R-Si(R¹)₃ and optionally R²-Si(R¹)₃ in water optionally in the presence of acid or base. Further details and methods can be found in the Examples, below.

Examples of readily available compounds of formula R-Si(R¹)₃ include vinyltriethoxysilane, vinyltrimethoxysilane, allyltriethoxysilane, allyltrimethoxysilane, allylphenylpropyltriethoxysilane, 3-butenyltriethoxysilane, docosenyltriethoxysilane, and hexenyltriethoxysilane. Examples of readily available end-capping agents having formulas R¹-Si(R³)₃ and O[Si(R³)₃]₂ include n-butyldimethylmethoxysilane, t-butyldiphenylmethoxysilane, 3-chloroisobutyldimethylmethoxysilane, phenyldimethylethoxysilane, n-propyldimethylmethoxysilane, triethylethoxysilane, trimethylmethoxysilane, triphenylethoxysilane, n-octyldimethylmethoxysilane, hexamethyldisiloxane, hexaethyldisiloxane, 1,1,1,3,3,3-hexaphenyldisiloxane, and 1,1,1,3,3,3-hexakis(4-(dimethylamino)phenyl)disiloxane.

In some embodiments, branched silsesquioxane copolymers can be made with two or more reactants of the formula R-Si(R¹)₃. For example, vinyltriethoxylsilane or allytriethoxysilane can be coreacted with an alkenylalkoxylsilane such as 3-butenyltriethoxysilane and hexenyltriethoxysilane. In this embodiment, the branched silsesquioxane polymers in which R is -Y-Z as described above includes the same Z group (i.e., -CH=CH₂) and different Y groups (e.g., a bond or -CH₂-, C₂H₄-, or -C₄H₈-). In some embodiments, the branched silsesquioxane polymer can comprise at least two different Z groups and the same Y group. In some embodiments, the branched silsesquioxane polymer comprises at least two reactants wherein both Y and Z are different than each other.

In some embodiments, curable silsesquioxane copolymers can be made with at least one reactant of the formula R-Si(R¹)₃ and at least one reactant of the formula R²-Si(R¹)₃. Examples of reactants of the formula R²-Si(R¹)₃ include aromatic trialkoxysilanes (e.g., phenyltrimethoxylsilane) and alkyl trialkoxysilanes (e.g., methyltrimethoxylsilane and octadecyltrimethoxysilane). Other commercially available R²-Si(R)₃ reactants include trimethylsiloxytriethoxysilane; p-tolyltriethoxysilane; n-propyltriethoxysilane; 1-naphthyltriethoxysilane; 3,4-methylenedioxyphenyltriethoxysilane; p-methoxyphenyltriethoxysilane; 3- isooctyltriethoxysilane; isobutyltriethoxysilane; 3,5-dimethoxyphenyltriethoxysilane; 11-chloroundecyltriethoxysilane; 3-chloropropyltriethoxysilane; p-chlorophenyltriethoxysilane; chlorophenyltriethoxysilane; benzyltriethoxysilane; and 2-[(acetoxy(polyethyleneoxy)propyl]triethoxysilane.

The inclusion of the co-reactant of the formula R²-Si(R¹)₃ can be useful for enhancing certain properties depending on the selection of the R² group. For example, when R² comprises an aromatic group such as phenyl, the thermal stability of the branched silsesquioxane polymer may be improved (relative to a homopolymer of vinyltrimethoxysilane).

The amount of reactant(s) of the formula R-Si(R¹)₃ can range up to 100 mol% in the case of homopolymers, before the endcapping step. The copolymers typically comprise up to 99, 98, 97, 96, 95, 94, 93, 92, 91, or 90 mol% of reactant(s) of the formula R-Si(R¹)₃. In some embodiments, the amount of reactant(s) of the formula R-Si(R¹)₃ is up to 85, 80, 75, 70, or 60 mol%. In some embodiments, the amount of reactant(s) of the formula R-Si(R¹)₃ is at least 15, 20, 25, or 30 mol%. When present, the amount of reactant(s) of the formula R²-Si(R¹)₃ can be at least 1, 2, 3, 4, 5, 6, 7, 8, 9, or 10 mol% of the copolymer. The amount of reactant(s) of the formula R²-Si(R¹)₃ is typically up to 75 mol % or 70 mol%. In some embodiments, the amount of reactant(s) of the formula R²-Si(R¹)₃ is at least 15, 20, 25, or 30 mol%. In some embodiments, the amount of reactant(s) of the formula R²-Si(R¹)₃ is up to 65 or 60 mol%. In some embodiments, the molar ratio of reactant(s) of the formula R-Si(R¹)₃ to molar ratio to reactant(s) of the formula R²-Si(R¹)₃ ranges from about 15:1 or 10:1 to 1:4, or 1:3, or 1:2.

For more information about branched silsesquioxane polymers useful for practicing the present disclosure and the method of making them, see, for example, U.S. Pat. No. 10,066,123 (Rathore et al.).

Useful branched silsesquioxane polymers can have a wide variety of viscosities. Viscosity correlates with molecular weight, that is, it increases with increasing molecular weight. The viscosity of the branched silsesquioxane polymer useful in the composition, article, and process of the present disclosure may be up to 50,000 centipoise (cps), 40,000 cps, 30,000 cps, 25,000 cps, 20,000 cps, 15,000 cps, 10,000 cps, 9,000 cps, 8,000 cps, 7,000 cps, 6,000 cps, 5,000 cps, 4,000 cps, or 3,000 cps as measured on a Brookfield DV-II+ Viscometer with the LV4 spindle. The viscosity of the branched silsesquioxane polymer useful in the compositions and articles of the present disclosure may be at least 100 cps, 200 cps, 300 cps, 400 cps, 500 cps, 600 cps, 700 cps, 800 cps, 900 cps, or 1,000 cps, as measured on a Brookfield DV-II+ Viscometer with the LV4 spindle. In some embodiments, the viscosity of the branched silsesquioxane polymer useful in the compositions and articles of the present disclosure may be in a range from 500 cps to 15,000 cps, 500 cps to 10,000 cps, 500 cps to 5,000 cps, or 1,000 cps to 3,000 cps.

The composition of the present disclosure and/or useful in the process of the present disclosure and the first composition in the article of the present disclosure include at least one non-fluorinated thermoplastic. Blends of non-fluorinated thermoplastics may be useful. In some embodiments, the non-fluorinated thermoplastic comprises at least one of a polyamide, a polycarbonate, a polyester, a polysulfone, or a polyetherimide. In some embodiments, the non-fluorinated thermoplastic comprises at least one of a polyamide, a polycarbonate, or a polyester. In some embodiments, the non-fluorinated thermoplastic comprises a blend of polycarbonate and a polyester. Suitable polyesters include poly(butylene terephthalate) and poly(ethylene terephthalate). In some embodiments, the non-fluorinated thermoplastic comprises a polyamide. The non-fluorinated thermoplastic does not have functional groups that react with the branched silsesquioxane polymer. Any suitable polyamide may be used, e.g., nylon 66, nylon 6, nylon 510, nylon 16, nylon 11, and nylon 12, and any suitable copolymer, mixture or blend thereof. Suitable nylons can be selected so that they can be readily molded (e.g., injection molded). Examples of suitable commercially available polyamides include those available form Du Pont (Wilmington, DE) under the trade designation ZYTEL; from Toray Industries (Tokyo, Japan) under the trade designation AMILAN; from DSM (Herleen, Netherlands) under the trade designation AKULON; and from Ashley Polymers (Cranford, NJ) under the trade designation ASHLENE. In some embodiments, the storage modulus of the non-fluorinated thermoplastic at 25 °C (in some embodiments, up to 65 °C) at a frequency of 1 Hz is at least 1 megaPascal (MPa), at least 10 MPa, at least 100 MPa, or at least a gigapascal as measured by rheometry. The non-fluorinated thermoplastic is not or does not include a pressure sensitive adhesive.

In the composition of the present disclosure and useful in the process of the present disclosure, the branched silsesquioxane polymer and the non-fluorinated thermoplastic and blended or mixed together either uniformly or nonuniformly. While the branched silsesquioxane polymer can bloom to the surface of the non-fluorinated thermoplastic, at least a portion of the branched silsesquioxane polymer is within the bulk of the non-fluorinated thermoplastic. Thus, the composition does not refer to a coating of the branched silsesquioxane polymer crosslinked on the surface of the non-fluorinated thermoplastic.

In some embodiments, the composition (in some embodiments, the first composition) contains at least 50% by weight, at least 70%, at least 75%, at least 80%, at least 90%, or even at least 95% by weight non-fluorinated thermoplastic(s) based on the total weight of the composition. In some embodiments, the composition (in some embodiments, the first composition) comprises one or more additives, chosen for a variety of purposes. Examples of suitable additives include mineral fillers, glass fibers or microspheres, impact modifiers, antioxidants, carbon black, stabilizers, plasticizers, colorants, lubricants, and flame retardants. In some embodiments, such additives will be present at a level or combined level of not more than 15, 10, 5, 2 or 1 percent by weight of the composition (in some embodiments, the first composition). In some embodiments, the non-fluorinated thermoplastic provides not more than 99.9, 99.5, 99, 98, 97, 96, 93, 88, 83, or 75 percent by weight of the composition (in some embodiments, the first composition).

The present disclosure provides an article comprising a first composition comprising a non-fluorinated thermoplastic in contact with a second composition comprising a silicone, wherein at least the first composition comprises the branched silsesquioxane polymer described above in any of its embodiments. In some embodiments, silicone resins useful in the second composition are polysiloxanes, which comprise repeating -Si-O-Si- units. Typically, the polysiloxanes comprise polydimethylsiloxane. In some embodiments, the silicone is curable. Silicones may become elastic upon curing or their elastic properties may increase upon curing; accordingly, silicones useful for the articles of the present disclosure include those that are elastomeric.

In some embodiments, the silicone in the second composition is represented by formula:

(R')(R³)₂SiO[(R²)SiO]_{r'}[(ZY)R²SiO]_{s'}Si(R³)₂(R').

In this formula, each R' is independently R³ or a terminal unit represented by formula -Y-Z; R², R³, Y, and Z are as defined above as described for the branched silsesquioxane polymer in any of their embodiments, including in which -Y-Z is defined for R*; and r'+s' is in a range from 10 to 500, 10 to 400, 10 to 300, 12 to 300, 13 to 300, 13 to 200, 10 to 100, 10 to 50, or 10 to 30. In some embodiments, r' is 0, and s' is in a range from 20 to 200, 30 to 100, or 10 to 100. In some embodiments, r'' is 0, and s' is in a range from 20 to 200, 30 to 100, or 10 to 100. In some embodiments when s' is 0, at least one R' is represented by formula -Y-Z. In some embodiments, at least 40 percent, and in some embodiments at least 50 percent, of the R groups are phenyl, methyl, or combinations thereof. For example, at least 60 percent, at least 70 percent, at least 80 percent, at least 90 percent, at least 95 percent, at least 98 percent, or at least 99 percent of the R groups can be phenyl, methyl, or combinations thereof. In some embodiments of formula XII, at least 40 percent, and in some embodiments at least 50 percent, of the R groups are methyl. For example, at least 60 percent, at least 70 percent, at least 80 percent, at least 90 percent, at least 95 percent, at least 98 percent, or at least 99 percent of the R groups can be methyl. In some embodiments, each R is methyl. Although the formula is shown as a block copolymer, it should be understood that the divalent units can be randomly positioned in the copolymer. Thus, polyorganosiloxanes useful for practicing the present disclosure also include random copolymers.

The second composition may also contain silicones comprising Si-H groups. Such silicones may act as crosslinkers, for example, for vinyl-substituted silicones such as those described above through a hydrosilylation reaction. Such a combination of substituted silicones is sometimes referred to as an addition curing system. Hydrosilylation-curable silicones can be provided as a one-part or a two-part silicone system. Thermosetting, hydrosilylation-curable silicone materials are often supplied as a first part comprising polysiloxanes bearing vinyl groups, and a second part comprising polysiloxanes bearing silicon-hydrides. The vinyl-substituted silicones in two-part systems typically do not include silicon-hydride groups. A suitable catalyst (e.g., a platinum catalyst) is usually included with one of the parts (e.g., the part that comprises vinyl groups) although the catalyst can be added separately if desired. Such two-part silicone materials are often referred to as liquid silicone rubber (LSR) and by similar names. Each of the two parts may be chosen so as to impart the finished (crosslinked) product with desired chemical and physical properties, whether by manipulation of crosslink density or by including reinforcing additives (e.g., fumed silica). Suitable thermosetting, hydrosilylation-curable silicone materials include products available DowDuPont (Midland, MI) under the trade designations SILASTIC and/or LC-x; products available from Wacker Chemie AG (Munich, Germany) under the trade designation ELASTOSIL; products available from Momentive Performance Materials (Waterford, NY) under the trade designation CLS, and products available from Shin-Etsu Chemical Co. (Tokyo, Japan) under the trade designations LIMS (Liquid Injection Molding System) and/or KE-x. One-part metal (platinum) curable silicone polymers are commercially available, for example, under the trade designation ELASTOSIL R PLUS 4450/60 and ELASTOSIL R PLUS 4110/70 from Wacker Chemie AG, Germany. Two-part platinum curable silicone systems are commercially available, for example under the trade designation ELASTOSIL R 533/60 A/B and ELASTOSIL LR 7665 from Wacker Chemie, AG and SILASTIC 9252/900P from Dow Coming.

Examples of useful platinum catalysts are known in the art. The platinum catalyst is typically used in amounts between 2 and 200 ppm platinum. Useful catalysts include platinum-containing compounds, especially platinum salts or platinum complexes having organic ligands or residues. The corresponding curable silicones are referred to as "platinum-curable". Examples of suitable platinum-containing catalysts include platinic chloride, salts of platinum, chloroplatinic acid, and various complexes. In some embodiments, transition metal catalyst is chloroplatinic acid, complexed with a siloxane such as tetramethylvinylcyclosiloxane (i.e. 1,3,5,7-tetramethyl-1,3,5,7-tetravinylcyclosiloxane) or 1,3-divinyl-1,1,3,3-tetramethyldisiloxane. In some embodiments, the transition metal catalyst is a platinum(0)-1,3-divinyl-1,1,3,3-tetramethyldisiloxane complex (i.e., Karstedt's catalyst).

In some embodiments, the silicone in the second composition is a peroxide-curable silicone. Peroxide curable silicones typically comprise methyl and/or vinyl groups and include those represented by formula (R')(R³)₂SiO[(R²)SiO]_{r'}[(ZY)R²SiO]_{s'}Si(R³)₂(R') and other vinyl-substituted silicones described above. The cross-link density of the cured silicone polymer may depend on both the vinyl or methyl level of the silicone polymer and the amount of curing agent. Peroxide curatives include organic or inorganic peroxides. In some embodiments, the peroxide is an organic peroxide. In some embodiments, the peroxide is an acyl peroxide. Acyl peroxides tend to decompose at lower temperatures than alkyl peroxides and allow for lower temperature curing. In some embodiments, the second composition includes at least one of benzoyl peroxide, dicumyl peroxide, di-tert-butyl peroxide, 2,5-dimethyl-2,5-di-tert-butylperoxyhexane, 2,4-dichlorobenzoyl peroxide, 1,1-bis(tert-butylperoxy)-3,3,5-trimethylchlorohexane, tert-butyl peroxy isopropylcarbonate (TBIC), tert-butyl peroxy 2-ethylhexyl carbonate (TBEC), tert-amyl peroxy 2-ethylhexyl carbonate, tert-hexylperoxy isopropyl carbonate, carbonoperoxoic acid, O,O'-1,3-propanediyl OO,OO'-bis(1,1-dimethylethyl) ester, tert-butylperoxy benzoate, t-hexyl peroxy-2-ethylhexanoate, t-butyl peroxy-2-ethylhexanoate, di(4-methylbenzoyl) peroxide, laurel peroxide, or cyclohexanone peroxide. Peroxides are typically used in amount between 0.1 to 10 parts per hundred parts of the curable silicone. In some embodiments, the second composition comprising a silicone includes from 0.5 to 3 parts per hundred parts of a peroxide. Peroxide curable silicone polymers are commercially available, for example under the trade designation Elastosil R 401/60 and Elastosil R 760/70 from Wacker Chemie AG, Munich, Germany.

The silicones described above in any of their embodiments, including hydrosilylation-curable silicones and peroxide-curable silicones, may be cured using any suitable cure temperature. In some embodiments, the cure temperature is above 100 °C. In some embodiments, the cure temperature is in a range from 120 °C to 200 °C. For peroxide-curable silicones, a temperature can be selected that is above (in some embodiments, at least 10 °C, 20 °C, 30 °C, 40 °C, or at least 50 °C above) the ten-hour half-life temperature of the peroxide. The heating time can be at least 5, 10, 15, 20, or 30 seconds, for example, 25 seconds up to two minutes, or up to 24 hours, depending on the composition of the silicone and the cross-sectional thickness of the cured article.

In addition to the silicone resins the catalysts described above, the second composition may contain curing agents, crosslinkers, fillers, and additives including those described above in connection with compositions comprising the non-fluorinated thermoplastic. While the composition or first composition comprising the non-fluorinated thermoplastic includes the branched silsesquioxane polymer, in some embodiments, the second composition also includes the branched silsesquioxane polymer. In some embodiments, the same branched silsesquioxane polymer is used in both the first and second compositions. In some embodiments, branched silsesquioxane polymers used in the first and second compositions are independently selected.

A wide range of amounts of the branched silsesquioxane polymer described above may be useful in the composition of the present disclosure or in the first and/or second composition. In the composition including the non-fluorinated thermoplastic or the first composition, the branched silsesquioxane polymer can be present in a range from 0.1% to 2% by weight, in some embodiments from 0.2% to 1.5% by weight or 0.5% to 1% by weight, based on the weight of non-fluorinated thermoplastic. When added to the second composition, the branched silsesquioxane polymer can be used in an amount from 0.1% to 15% by weight, in some embodiments from 1% and 10% by weight, based on the weight of silicone in the second composition.

If the composition including the non-fluorinated thermoplastic or the first composition includes too much of the branched silsesquioxane polymer, processing the non-fluorinated thermoplastic using methods such as extrusion and injection molding, described below, may be difficult depending on the design of the equipment. For example, in an injection molding apparatus, again depending on the design, too much of the branched silsesquioxane polymer may cause the screw to slip, resulting in an undesirably long screw recovery time. A range from 0.1% to 2% by weight, in some embodiments from 0.2% to 1.5% by weight or 0.5% to 1% by weight of the branched silsesquioxane polymer, based on the weight of non-fluorinated thermoplastic, allows the branched silsesquioxane polymer to beneficially affect adhesion in the article and process disclosed herein without causing difficulty in processing the non-fluorinated thermoplastic.

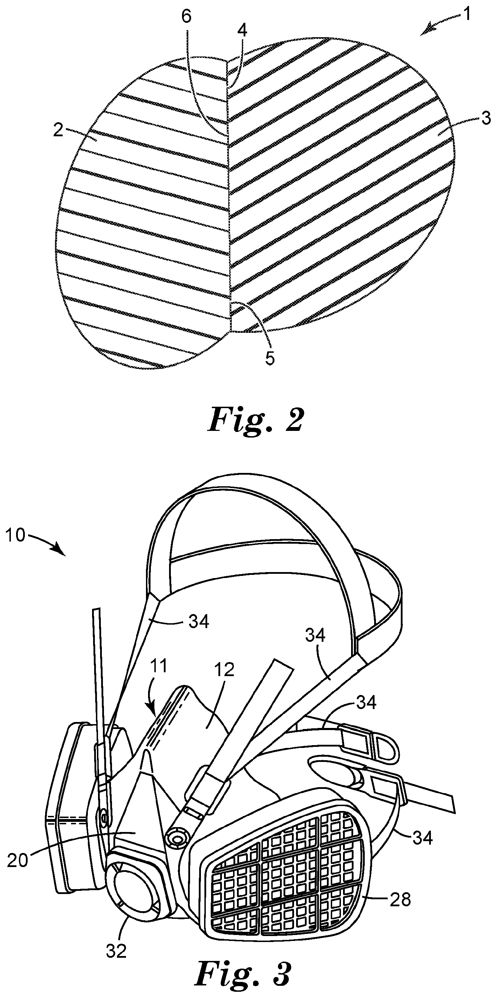

FIG. 2 illustrates an embodiment of an article 1 of the present disclosure comprising a first composition 2 comprising a non-fluorinated thermoplastic in contact with a second composition 3 comprising a silicone. The first composition 2 may be in the form of a first molded piece and the second composition 3 may be in the form of a second molded piece. A portion 6 of a surface of the second composition 3 is in contact with a portion 5 of a surface of the first composition 2 at an interface 4. The first composition and the second composition are macroscopic, discrete components (although they are in contact with each other as disclosed herein, for example, at interface 4. An article as disclosed herein is thus distinguished from microscopically multiphase polymeric materials such as blends, filled polymeric materials, alloys, and mixtures of the first composition comprising a non-fluorinated thermoplastic and a second composition comprising a silicone (although each of the first composition and the second composition is typically itself a blend as discussed in detail herein). In some embodiments, a portion 6 of a surface of the second composition 3 (e.g., in the form of a molded piece) contacts a portion 5 of a surface of the first composition 2 (e.g., in the form of a molded piece) at interface 4.

The first composition 2 and the second composition 3 are typically bonded together (in some embodiments, autogenously bonded together.) By autogenous bonding, autogenously bonded, and similar terms, it is meant that portion 6 of a surface of second composition 3 is bonded to portion 5 of a surface of first composition 2 by way of bonds (e.g., covalent bonds) between molecules of a component of the second composition 3 and molecules of a component of the first composition 2. An autogenous bond is thus a "direct" bond between surfaces of first and second compositions 2 and 3 (in some embodiments, first and second molded pieces), and excludes, for example, bonding by way of an adhesive that is introduced into an interface between the first and second compositions. An autogenous bond between second composition 3 and first composition 2 may be established during the process of molding the second composition 3 while it is in contact with the first composition 2, as discussed in detail below.

In some embodiments, the carbon-carbon double bond of the branched silsesquioxane polymer in the first composition including the non-fluorinated thermoplastic reacts with carbon-carbon double bond or silicon-hydride group in the silicone present in the second compositions. The branched silsesquioxane polymer may be dispersed throughout the first composition in uniform or nonuniform fashion. It is also possible that the branched silsesquioxane polymer blooms to the surface of the first composition, providing a higher concentration of the branched silsesquioxane polymer at the surface. However, at least a portion of the branched silsesquioxane polymer is blended with the non-fluorinated thermoplastic. In other words, in the article of the present disclosure, at least a portion of the branched silsesquioxane polymer is within the bulk of the non-fluorinated thermoplastic, and the branched silsesquioxane polymer is not provided as a coating on the surface of the non-fluorinated thermoplastic.

In some embodiments, the article is a dual-molded article comprising a first molded piece comprising the first composition 2 bonded (in some embodiments, autogenously bonded) to a second molded piece comprising the second composition 3. By dual-molded is meant that first molded piece is formed by introducing the first composition 2 into a molding chamber as a flowable composition and at least partially solidifying the first composition 2 to form the first molded piece, after which the second composition 3 is introduced into a molding chamber so that a portion 6 of a surface of the second composition comes into contact with a portion 5 of a surface of first composition 2. The term dual-molding as used herein broadly encompasses various molding processes including insert molding, overmolding, co-molding, multi-component molding, and multi-shot molding. In some embodiments of the article and process of the present disclosure, the first composition is melted, molded, and at least partially solidified. The term "molding" generally encompasses melting a composition, shaping the composition into a desired shape, and solidifying the shaped composition into a molded piece.

The article of the present disclosure and/or made by the process of the present disclosure may be made by any suitable molding process (e.g., injection molding, transfer molding, or compression molding). In some embodiments, the molding process is injection molding. In a suitable injection molding process, the first composition is heated at least to the melting point of its major constituents (disregarding any substantially unmeltable materials, such as mineral fillers, that might be present) to form a flowable composition that is introduced into a mold. The composition may flow through an extruder screw and be collected in a heated chamber from which it may be injected into a hollow mold cavity using a hydraulic piston. The first composition is thus formed into a desired shape and at least partially solidified. In some embodiments, this may be performed in a first molding chamber with the first molded piece then being removed and placed in a second molding chamber to await the insertion of the second composition 3. (Such a process is sometimes referred to as insert molding.) In some embodiments, first composition 2 may remain in the cavity in which it was molded and the second composition 3 may be introduced into a remaining portion of the cavity. (Such a process is sometimes referred to as co-molding or multi-shot molding.) Dual-molding as disclosed herein encompasses any suitable variation of any such method.

Either or both of the non-fluorinated thermoplastic and the branched silsesquioxane polymer may be dried or otherwise processed as needed for optimum behavior in a molding process. The non-fluorinated thermoplastic may be loaded into the hopper of a molding apparatus (e.g., an injection-molding apparatus) as a solid (e.g., in the form of pellets). The branched silsesquioxane polymer can be added to the hopper or feed throat of the molding apparatus (e.g., an injection-molding apparatus) as a liquid. The mixture can then be conveyed into a melting chamber (e.g. a heated barrel) of the molding apparatus in which the non-fluorinated thermoplastic melted to form a molten, flowable material that is combined with the branched silsesquioxane polymer to form a moldable molten blend. In some embodiments, it is not necessary for the non-fluorinated thermoplastic and the branched silsesquioxane polymer to be pre-compounded with each other as a precursor step to being loaded into a molding apparatus. If the first composition 2 is desired to exhibit a color, in some embodiments, the branched silsesquioxane polymer may be pre-compounded with any suitable colorant (e.g., a pigment or dye), at any colorant level that will impart the desired color to the final, molded piece. Conveniently, the branched silsesquioxane polymer, either with or without colorant, can be added using any system capable of adding a liquid to an injection molding press such as hat obtained from 3M Company (St. Paul, MN) and PolyOne Corp (Avon Lake, Ohio) under the trade designation "PINPOINT" Express Color and Dosing System.

The non-fluorinated thermoplastic is typically maintained at a temperature that is sufficiently high to maintain the first composition in a molten, flowable state while it is introduced into a molding chamber. The molding chamber may be held at any such temperature before and during the insertion of the first composition into the molding chamber. Once the first composition is in the chamber, the chamber walls may be cooled at any suitable rate and to any suitable temperature that is appropriate to solidify the first composition 2 into a first molded piece.

In the article of the present disclosure, including the article illustrated in FIG. 2, the second composition 3 comprises a silicone. In some embodiments, the second composition comprises at least one of a thermosetting, hydrosilylation-curable silicone material or a thermoset, hydrosilylation-cured silicone polymer, including any of those described above in any of their embodiments. As noted above, many hydrosilylation-curable silicone materials are provided as two-part mixtures to be mixed, for example, at a 1:1 ratio or at a 10: 1 ratio. Typically, both parts are miscible liquids which can be easily mixed together to form a curable second composition 3. Either of both of the liquid parts may be degassed or otherwise processed for optimum behavior in a molding process. A curable second composition can then be introduced as a flowable liquid into the molding chamber with the first molded piece present therein. The molding chamber is controlled to a desired elevated temperature to promote the curing reaction (of silyl hydrides moities with vinyl moities); the chamber may be held at this temperature for any appropriate length of time. The time-temperature exposure of first composition 2 during this second molding operation is typically controlled to ensure that first molded piece 2 does not unacceptably melt, sag, or deform during the molding of the second molded piece. In some embodiments, the molding chamber may be controlled to a temperature that ensures that no portion of first composition 2 comes within 30 °C, 40 °C, 50 °C, 60 °C, or 70 °C of the melting point of the non-fluorinated thermoplastic of the first composition 2. During the process of molding the second composition 3 to form the second molded piece, a portion 6 of the second composition will be in contact with a portion 5 of a surface of the first molded piece 2. In some embodiments, autogenous bonding of the second composition 3 with portion 5 of the surface of first composition 2 will occur during the process of curing the second composition 3 to form second molded piece. Thus, an autogenous bond can be formed between surface portions 5 and 6 of the first and second compositions, at interface 4 therebetween. After the curing of the silicone material (and in some embodiments, formation of an autogenous bond between surface portions 5 and 6 of first and second compositions 2 and 3) has been completed to a sufficient extent, the chamber can be cooled to a desired temperature and the mold opened to remove the article 1. Some additional curing of the silicone and/or strengthening of the autogenous bond may continue at a low level for some time, even after the article is removed from the mold. The dual-molding process can be repeated as necessary to produce any desired number of articles 1.

The present work has revealed that including a branched silsesquioxane polymer in the first composition 2 that is used to form the first molded piece, can significantly enhance the strength of the bond between the second composition 3 comprising a silicone and the first composition 2 comprising a non-fluorinated thermoplastic. In some embodiments, the presence of the branched silsesquioxane polymer allows articles of the present disclosure to withstand exposure to water under demanding circumstances (e.g., upon exposure to high-temperature flowing liquid water and to high-temperature water vapor). For example, as evidenced in the Examples herein, it has been found that the presence of the branched silsesquioxane polymer can enable the first and second compositions of a dual-molded article to remain securely bonded to each other even after the bonded pieces have been subjected to multiple (e.g., dozens) of wash cycles in a dishwasher. As shown in the Table 1 in the Examples, below, the adhesion values for Examples 2 and 3 are higher than for Control Examples A and B. In some embodiments, similar articles in which the first molded piece does not include any branched silsesquioxane polymer can be separated with a minimum of force (e.g., by hand with trivial effort) even before being subjected to a dishwasher exposure. The branched silsesquioxane polymer in the composition, article, and method of the present disclosure may also be useful, for example, for preventing or minimizing fouling of a mold.

Articles of the present disclosure can have any desired shape and size and can be used for any desired purpose. In contrast to the generic, representative illustration of FIG. 2, the interface 4 between the surface portions 5 and 6 of first and second compositions 2 and 3 does not have to exhibit a simple (e.g., planar) configuration. Rather, the interface may be complex, with multiple faces and angles. In some embodiments, surface portion 5 of first composition 2 may be configured with texture or with multiple dead-end cavities and/or through-holes, into or through which the second compositions may penetrate. Such arrangements may further enhance the strength of the bond between the first and second compositions 2 and 3.

In some embodiments, first composition may be a relative hard and rigid item (e.g., with a Shore D hardness of at least 50, 60, 70 or 80), with the second composition 3 being a relatively soft and flexible item (e.g., with a Shore A hardness of at most 70, 60, 50, 40 or 30). In many embodiments, the second composition may serve as a resilient item that provides, for example, a cushioning, gasketing, or sealing function for the first composition.

In some embodiments of the article and method of the present disclosure, first and second compositions 2 and 3 may be components of a respirator. An illustrative embodiment of a respirator 10 is shown in FIG. 3. The term "respirator" means a personal respiratory protection device that is worn by a person to filter air before the air enters the person's respiratory system. This term encompasses full face respirators, half mask respirators, powered air purifying respirators, and self contained breathing apparatus, for example. The illustrated respirator 10 includes a facepiece 11 that supports any number and type of respiratory protection elements including one or more chemical or particulate filtration cartridge 28. Facepiece 11 may also comprise one or more inhalation valves and/or exhalation valves 32, as well as one or more straps 34 configured to secure the facepiece 11 of respirator 10 to a user's head.

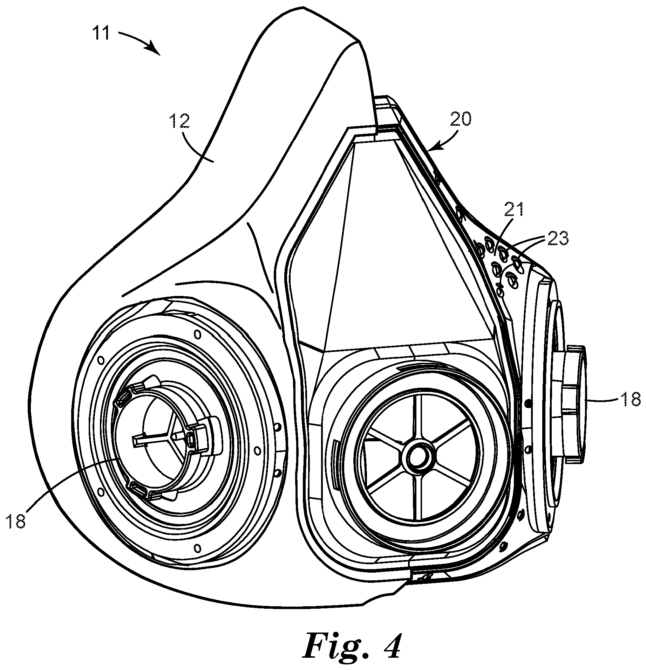

Such a respirator 10 may often comprise a facepiece 11 that comprises a relatively rigid facepiece body 20 (as seen in greater detail in FIG. 4) to which is attached a sealing element 12 (most easily seen in FIG. 4, noting that sealing element 12 is shown in FIG. 3 in partial cutaway for ease of presentation). The facepiece body 20 may provide mechanical integrity and may support the various respirator protection elements (e.g., filter cartridges), while the sealing element 12 may serve as a face seal that compliantly and resiliently seals against the face of a wearer of the respirator. The facepiece body 20 may comprise one or more inlets 18 to which a filter cartridge may be fluidly coupled and which may comprise inhalation valves, and one or more outlets, which may comprise an exhalation valve 32.

In some embodiments of the article and process of the present disclosure, the first composition may serve as a facepiece body 20 of a respirator 10 and the second composition may serve as a sealing element 12 of the respirator 10. In some embodiments, sealing element 12 is autogenously bonded to facepiece body 20. In some embodiments, the first composition as a first molded piece may thus comprise any or all of inlets, outlets, inhalation valves, and exhalation valves, for example, as desired for any particular respirator. In some embodiments, one or more apertures 23 may be provided in surface portion 21 of the surface of facepiece body 20 to which sealing element 12 is to be bonded. During the molding of sealing element 12, the curable second composition may flow into and/or through the one or more apertures 23 and may thus form a mechanical interlock between sealing element 12 and facepiece body 20. Similar effects may be achieved by providing this surface portion 21 of facepiece body 20 with protrusions around which the second composition can flow.

In some embodiments, sealing element 12 may provide a face seal as noted above. Such a face seal may include an in-turned cuff or flange that further enhances the resiliency with which the face seal contacts a wearer's face. In some embodiments, sealing element 12 may serve another purpose, either instead of, or in addition to, providing a face seal. Specifically, a portion of sealing element 12 may be positioned proximate an inlet of facepiece body 20; such a portion may be configured to provide a resilient gasket between facepiece body 20 and a filter cartridge 28 that is fluidly coupled to an inlet of facepiece body 20.

### Some Embodiments of the Disclosure

In a first embodiment, the present disclosure provides a composition comprising a non-fluorinated thermoplastic and a branched silsesquioxane polymer comprising terminal -Si(R³)₃ groups and units represented by formula: 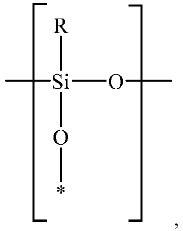 wherein * represents a bond to another silicon atom in the branched silsesquioxane polymer, each R is independently an organic group comprising an aliphatic carbon-carbon double bond, and each R³ is independently a non-hydrolyzable group with the proviso that one R³ may be hydrogen. In a second embodiment, the present disclosure provides the composition of the first embodiment, wherein the composition is free of fluorinated polymer. In the third embodiment, the present disclosure provides the composition of the first or second embodiment, wherein the composition comprises a blend or a mixture of the branched silsesquioxane polymer and the non-fluorinated polymer. In a fourth embodiment, the present disclosure provides the composition of any one of the first to third embodiments, wherein the branched silsesquioxane polymer further comprises units represented by formula: 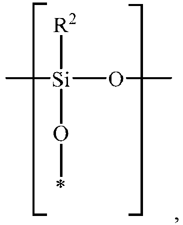 wherein * represents a bond to another silicon atom in the branched silsesquioxane polymer, and each R² is independently hydrogen or a non-hydrolyzable group that does not include an aliphatic carbon-carbon double bond. In a fifth embodiment, the present disclosure provides the composition of the fourth embodiment, wherein each R² is independently hydrogen, alkyl, aryl, alkylene at least one of interrupted or terminated by arylene or heterocyclylene, wherein alkyl and alkylene at least one of interrupted or terminated by arylene or heterocyclylene are unsubstituted or substituted with halogen and optionally interrupted by at least one catenated -O-, and wherein aryl, arylene, and heterocyclylene are unsubstituted or substituted by at least one alkyl, alkoxy, halogen, or combination thereof. In a sixth embodiment, the present disclosure provides the composition of the fourth or fifth embodiment, wherein each R² is independently alkyl or phenyl. In a seventh embodiment, the present disclosure provides the composition of any one of the first to sixth embodiments, wherein each R is independently represented by -Y-Z, wherein Y is a bond, alkylene, arylene, or alkylene at least one of interrupted or terminated by arylene, -O-, -NR'-, or a combination thereof, and wherein Z is -CH=CH₂, -O-CH=CH₂, -O-C(O)-CH=CH₂, -O-C(O)-C(CH₃)=CH₂, -NR'-C(O)-CH=CH₂, -NR'-C(O)-C(CH₃)=CH₂, wherein R' is hydrogen or alkyl having up to four carbon atoms. In an eighth embodiment, the present disclosure provides the composition of the seventh embodiment, wherein Y is a bond, alkylene, arylene, or alkylene at least one of interrupted or terminated by arylene. In a ninth embodiment, the present disclosure provides the composition of the eighth embodiment, wherein Y is a bond or -CH₂-, and wherein Z is -CH=CH₂. In a tenth embodiment, the present disclosure provides the composition any one of the first to ninth embodiments, wherein each R³ is independently alkyl or aryl. In an eleventh embodiment, the present disclosure provides the composition of the tenth embodiment, wherein each R³ is independently alkyl having up to four carbon atoms or phenyl.

In a twelfth embodiment, the present disclosure provides the composition of any one of the first to eleventh embodiments, wherein the non-fluorinated thermoplastic has a storage modulus at 25 °C and at a frequency of 1 Hz is at least 1 megaPascal (MPa), at least 10 MPa, at least 100 MPa, or at least a gigapascal. In a thirteenth embodiment, the present disclosure provides the composition of any one of the first to twelfth embodiment, wherein the non-fluorinated thermoplastic is not or does not include a pressure sensitive adhesive. In a fourteenth embodiment, the present disclosure provides the composition of any one of the first to thirteenth embodiments, wherein the non-fluorinated thermoplastic comprises at least one of a polyamide, a polycarbonate, or a polyester, or wherein the non-fluorinated thermoplastic comprises a polyamide, or wherein the non-fluorinated thermoplastic comprises polycarbonate and poly(butylene terephthalate). In a fifteenth embodiment, the present disclosure provides the composition of any one of the first to fourteenth embodiments, wherein the non-fluorinated thermoplastic does not include functional groups that react with the branched silsesquioxane polymer. In a sixteenth embodiment, the present disclosure provides the composition of any one of the first to fifteenth embodiments, wherein the branched silsesquioxane polymer is present in the composition in a range from 0.1 percent to 2 percent by weight, based on the total weight of the composition.

In a seventeenth embodiment, the present disclosure provides an article comprising a first composition comprising a non-fluorinated thermoplastic in contact with a second composition comprising a silicone, wherein at least the first composition comprises a branched silsesquioxane polymer comprising terminal -Si(R³)₃ groups and units represented by formula: 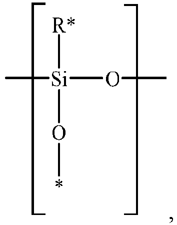 wherein * represents a bond to another silicon atom in the branched silsesquioxane polymer, each R* is independently an organic group comprising an aliphatic carbon-carbon double bond or an organic group comprising at least one of a carbon-silicon bond or carbon-carbon bond between the branched silsesquioxane polymer and the silicone or another R* group in the branched silsesquioxane polymer, and each R³ is independently a non-hydrolyzable group with the proviso that one R³ may be hydrogen. **In an** eighteenth embodiment, the present disclosure provides the article of the seventeenth embodiment, wherein the branched silsesquioxane polymer further comprises units represented by formula 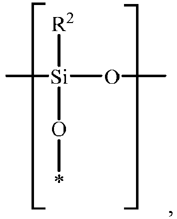 wherein * represents a bond to another silicon atom in the branched silsesquioxane polymer, and each R² is independently hydrogen or a non-hydrolyzable group that does not include an aliphatic carbon-carbon double bond. In a nineteenth embodiment, the present disclosure provides the article of the eighteenth embodiment, wherein each R² is independently hydrogen, alkyl, aryl, alkylene at least one of interrupted or terminated by arylene or heterocyclylene, wherein alkyl and alkylene at least one of interrupted or terminated by arylene or heterocyclylene are unsubstituted or substituted with halogen and optionally interrupted by at least one catenated -O-, and wherein aryl, arylene, and heterocyclylene are unsubstituted or substituted by at least one alkyl, alkoxy, halogen, or combination thereof. In a twentieth embodiment, the present disclosure provides the article of the nineteenth embodiment, wherein each R² is independently alkyl or phenyl. In a twenty-first embodiment, the present disclosure provides the article of any one of the seventeenth to twentieth embodiments, each R* is independently represented by -Y-Z, wherein Y is a bond, alkylene, arylene, or alkylene at least one of interrupted or terminated by arylene , -O-, -NR'-, or a combination thereof, and wherein Z is -CH=CH₂, -CH₂-CH=CH₂, -O-CH=CH₂, -O-C(O)-CH=CH₂, -O-C(O)-C(CH₃)=CH₂, -NR'-C(O)-CH=CH₂, or -NR'-C(O)-C(CH₃)=CH₂, or a reaction product thereof, wherein R' is hydrogen or alkyl having up to four carbon atoms. In a twenty-second embodiment, the present disclosure provides the article of the twenty-first embodiment, wherein the reaction product thereof comprises the at least one of a carbon-silicon bond or carbon-carbon bond between the branched silsesquioxane polymer and the silicone or another R* group in the branched silsesquioxane polymer. In a twenty-third embodiment, the present disclosure provides the article of the twenty-first or twenty-second embodiment, wherein Y is a bond, alkylene, arylene, or alkylene at least one of interrupted or terminated by arylene. In a twenty-fourth embodiment, the present disclosure provides the article of any one of the twenty-first to twenty-third embodiments, wherein Y is a bond or -CH₂-, and wherein Z is -CH=CH₂. In a twenty-fifth embodiment, the present disclosure provides the article of any one of the twenty-first to twenty-third embodiments, wherein Y is a bond or -CH₂-, and wherein Z is at least one of a carbon-silicon bond or carbon-carbon bond between the branched silsesquioxane polymer and the silicone. In a twenty-sixth embodiment, the present disclosure provides the article of any one of the twenty-first to twenty-third embodiments or the twenty-fifth embodiment, wherein Y is a bond or -CH₂-, and wherein Z is the carbon-silicon bond between the branched silsesquioxane polymer and the silicone. In a twenty-seventh embodiment, the present disclosure provides the article of any one of the seventeenth to twenty-sixth embodiments, wherein each R³ is independently alkyl or aryl. In a twenty-eighth embodiment, the present disclosure provides the article of any one of the seventeenth to twenty-sixth embodiments or the twenty-seventh embodiment, wherein each R³ is independently alkyl having up to four carbon atoms or phenyl.

In a twenty-ninth embodiment, the present disclosure provides the article of any one of the seventeenth to twenty-eighth embodiments, wherein the non-fluorinated thermoplastic has a storage modulus at 25 °C and at a frequency of 1 Hz is at least 1 megaPascal (MPa), at least 10 MPa, at least 100 MPa, or at least a gigapascal. In a thirtieth embodiment, the present disclosure provides the article of any one of the seventeenth to twenty-ninth embodiments, wherein the non-fluorinated thermoplastic is not or does not include a pressure sensitive adhesive. In a thirty-first embodiment, the present disclosure provides the article of any one of the seventeenth to thirtieth embodiments, wherein the non-fluorinated thermoplastic comprises at least one of a polyamide, a polycarbonate, or a polyester, or wherein the non-fluorinated thermoplastic comprises polyamide, or wherein the non-fluorinated thermoplastic comprises polycarbonate and poly(butylene terephthalate). In a thirty-second embodiment, the present disclosure provides the article of any one of the seventeenth to thirty-first embodiments, wherein the non-fluorinated thermoplastic does not include functional groups that react with the branched silsesquioxane polymer. In a thirty-third embodiment, the present disclosure provides the article of any one of the seventeenth to thirty-second embodiments, wherein the branched silsesquioxane polymer is present in the first composition in a range from 0.1 percent to 2 percent by weight, based on the total weight of the composition. In a thirty-fourth embodiment, the present disclosure provides the article of any one of the seventeenth to thirty-third embodiments, wherein the silicone comprises a curable polydimethysiloxane. In a thirty-fifth embodiment, the present disclosure provides the article of any one of the seventeenth to thirty-fourth embodiments, wherein the silicone comprises a thermoset, hydrosilylation-cured silicone polymer that shares at least one of carbon-silicon or carbon-carbon bond with the branched silsesquioxane polymer.

In a thirty-sixth embodiment, the present disclosure provides the article of any one of the seventeenth to thirty-fifth embodiments, wherein the article is a dual-molded article comprising a first molded piece comprising the first composition bonded to a second molded piece comprising the second composition. In a thirty-seventh embodiment, the present disclosure provides the article of the thirty-sixth embodiment, wherein the first molded piece and the second molded piece are components of a facepiece of a respirator. In a thirty-eighth embodiment, the present disclosure provides the article of the thirty-seventh embodiment, wherein the first molded piece is a nose piece of the respirator facepiece. In a thirty-ninth embodiment, the present disclosure provides the article of the thirty-seventh or thirty-eighth embodiment, wherein the second molded piece comprises a sealing element, wherein a portion of the sealing element is configured to contact the face of a wearer of the respirator in order to provide a face seal of the respirator facepiece, and/or wherein a portion of the sealing element is configured to provide a gasket between the facepiece body and a filter cartridge that is fluidly coupled to the facepiece body.

In a fortieth embodiment, the present disclosure provides a process for making a dual-molded article, the process comprising molding the composition of any one of the first to sixteenth embodiments to form a first molded piece and molding a thermosetting, hydrosilylation-curable silicone polymer to form a second molded piece while a portion of a surface of the silicone polymer is in contact with a portion of a surface of the first molded piece. In a forty-first embodiment, the present disclosure provides the process of the fortieth embodiment, wherein during the molding of the second molded piece, the portion of the surface of the silicone polymer that is in contact with the portion of the surface of the first molded piece forms at least one of a carbon-silicon bond or carbon-carbon bond with the branched silsesquioxane polymer in the first molded piece. In a forty-second embodiment, the present disclosure provides the process of the forty-first embodiment, wherein molding the composition takes place in an injection-molding press. In a forty-third embodiment, the present disclosure provides the process of the forty-first or forty-second embodiment, wherein the first molded piece and the second molded piece are components of a facepiece of a respirator. In a forty-fourth embodiment, the present disclosure provides the process of the forty-third embodiment, wherein the first molded piece is a nose piece of the respirator facepiece. In a forty-fifth embodiment, the present disclosure provides the process of the forty-third or forty-fourth embodiment, wherein the second molded piece comprises a sealing element, wherein a portion of the sealing element is configured to contact the face of a wearer of the respirator in order to provide a face seal of the respirator facepiece, and/or wherein a portion of the sealing element is configured to provide a gasket between the facepiece body and a filter cartridge that is fluidly coupled to the facepiece body.

The following specific, but non-limiting, examples will serve to illustrate the present disclosure.

### EXAMPLES

The following abbreviations are used in this section: g=grams, lb=pounds, f=feet, in.=inches, centimeters = cm, wt%= percent by weight, min.=minutes, h=hours, N = newtons, kN = kilonewton, MW=molecular weight, °F=degrees Fahrenheit, °C=degrees Celsius, V = volt.

### Preparatory Example 1, Vinyl SSQ

To 50 g vinyltrimethoxysilane (Oakwood Chemical, Estill, SC) was added 32 g deionized water. This was mixed using a mechanical stirrer before 0.5 g 5 wt% HCl solution was added, and the solution was heated at 65 °C for 6 h. To this was added 10 g ethoxytrimethylsilane (Oakwood Chemical) and heated at 65 °C for 2 h. This was followed by cooling the mixture to ambient temperature and then quenching the reaction by adding ice water. Two layers formed, and the bottom layer was decanted using a separatory funnel and then washed with 100 g cold water three times. The vinyl SSQ obtained was dried in a vacuum at 30 °C for 8 h to remove residual water. The viscosity of Preparative Example 1 was 2100 centipoise (cps).

### Preparatory Example 2, Vinyl, co-Phenyl SSQ (75:25)

To 750 g vinyltrimethoxy silane (Oakwood Chemical) was added 250 g triethoxy phenyl silane (Alfa Aeser) and 150 g ethoxytrimethyl silane (Oakwood Chemical). To this was added 500 g water and 20 g of 5 wt% HCl solution. Within minutes an exotherm occurred which raised the temperature to about 60 °C, and the solution became clear. The solution was heated at 70 °C for 3 hours. On cooling to 50 °C, two layers formed, and the bottom product layer was collected and washed with 250 g of warm water (about 50 °C) 4 times or till neutral pH. The phase splits were fast and distinct. The SSQ obtained was dried in a vacuum at 30 °C for 8 h to remove residual water.

Allyltrimethoxysilane (Oakwood Chemical) can be used in place of vinyltrimethoxysilane, or a combination of allyltrimethoxysilane or vinyltrimethoxysilane with alkyl or aryl trimethoxysilanes can be used as described in Int. Pat. Appl. Pub. No. WO 2021/046266 (Mitchell et al.) to prepare further Preparatory Examples.

### Example 1: Polycarbonate and polybutylene terephthalate blend / vinyl SSQ composition

A polycarbonate and polybutylene terephthalate blend was obtained from Sabic, Riyadh, Saudi Arabia, under the trade designation "VALOX 357". The vinyl SSQ made in Preparatory Example 1 was poured into a one-quart plastic container. A lid was attached, and the container was flipped upside down and locked onto a dosing system obtained from 3M Company (St. Paul, MN) and PolyOne Corp (Avon Lake, Ohio) under the trade designation "PINPOINT" Express Color and Dosing System. The lid included a mechanical pump, and an electric motor drove the pump from a 24V signal from the machine during screw rotation. The entire assembly was powered by a 110V source.

A small hose was connected from the pump to convey the vinyl SSQ to the feed throat of a conventional injection molding apparatus. The polycarbonate and polybutylene terephthalate blend was loaded into a hopper of the injection molding apparatus. The amount of vinyl SSQ was one percent by weight, based on the total weight of the polycarbonate and polybutylene terephthalate blend and the vinyl SSQ. The extrusion barrel of the apparatus was held at a nozzle temperature of 540 °F (282 °C); the injection mold was held at 180 °F (82 °C). The molding cycle time was about 4 to 5 seconds. The injection molding process was used to mold elongate coupons that were roughly rectangular in shape.

### Example 2: Article including silicone molded onto coupon of polycarbonate and polybutylene terephthalate blend

Each molded coupon was removed from the injection molding cavity and was then placed into a cavity of a second molding apparatus. A two-part, hydrosilylation-cure silicone rubber precursor was obtained from Shin-Etsu Silicones of America, Inc., Akron, OH, under the trade designation "ShinEtsu KE 2090-60". The two parts were metered into a mixing barrel and traveled from there into an injection barrel, which was water cooled to prevent any premature reaction of the two parts. The mixed silicone materials were injected into the cavity containing the previously molded coupon, with the injection mold held in the range of 330 °F (166 °C). The molding cycle time was 60 seconds.

The molding cavity of the second (silicone) molding apparatus was sized and shaped so that the silicone material was cured into an approximate "S" shape, with a portion of the lower surface of the lower (horizontal) portion of the S-shaped piece being in contact with a forward portion of the upper surface of the coupon of the polycarbonate and polybutylene terephthalate blend. All samples of Example 2 appeared to have good adhesion between the silicone and the coupon of the polycarbonate and polybutylene terephthalate blend.

### Control Example A

The polycarbonate and polybutylene terephthalate blend obtained from Sabic under the trade designation "VALOX 357" was injection molded as in Example 1 except the Vinyl SSQ was not added. A two-part, hydrosilylation-cure silicone rubber precursor obtained from Shin-Etsu Silicones of America, Inc., under the trade designation "ShinEtsu KE 2090-60" was molded over the previously molded coupon of the polycarbonate and polybutylene terephthalate blend as described in Example 2.

### Example 3: Article including silicone molded onto coupon of polycarbonate and polybutylene terephthalate blend

Example 3 was prepared in the same way as Example 2 except that the two-part, hydrosilylation-cure silicone rubber precursor was obtained under the trade designation "ShinEtsu X34-4172" from Shin-Etsu Silicones of America, Inc., instead of "ShinEtsu KE 2090-60".

### Control Example B

The polycarbonate and polybutylene terephthalate blend obtained from Sabic under the trade designation "VALOX 357" was injection molded as in Example 1 except the Vinyl SSQ was not added. A two-part, hydrosilylation-cure silicone rubber precursor obtained from Shin-Etsu Silicones of America, Inc., under the trade designation "ShinEtsu X34-4172" was molded over the previously molded coupon of the polycarbonate and polybutylene terephthalate blend as described in Example 3.

### Dishwasher Treatment

Fourteen samples of Example 2, Example 3, Control Example A, or Control Example B were grouped together using a zip tie and put into a commercial dishwasher (Model # GS1200 from American Airworks, Sophia WV). The dishwasher was then loaded with reagents of the sort customarily used in the cleaning of respirator components; specifically, a detergent, a disinfecting agent, and a rinse agent. All reagents were commercially available, widely used products. The batch of samples was subjected to 200 dishwasher cycles. Each cycle was one hour, with the washing, rinsing, and disinfecting cycles lasting approximately 42 minutes. The temperature of the water was estimated to be about 120 °F to 135 °F (49 °C to 57 °C). The dishwasher reagents (rinse agent, detergent and disinfectant) were replenished every 30 to 40 cycles, or as needed. After 200 dishwasher cycles, the samples were dried in a commercial cabinet dryer for 24 hours at approximately 30 °C. No samples were delaminated when they were removed from the washer.

### Adhesion Evaluation

The bond between the molded silicone piece and the coupon of the polycarbonate and polybutylene terephthalate blend was evaluated by measuring the force required to separate the molded silicone piece from the polycarbonate and polybutylene terephthalate blend coupon. Examples 2 and 3 were tested along with Control Examples A and B. The testing was done using a mechanical testing apparatus obtained from Instron Corporation, Norwood, MA. The polycarbonate and polybutylene terephthalate blend coupon was held by a first grip of the mechanical testing apparatus. The upper horizontal portion of the "S"-shaped silicone piece was held by a second grip of the mechanical testing apparatus. The fixture used for testing can allow for too much substrate deflection so an additional substrate was inserted as a shim to reduce deformation prior to failure. The first and second grips, having a one-in. (2.54-cm) gap were pulled away from each other; the sample configuration was such that the test amounted to an approximately 90 ° peel test. The testing speed was five in. per min. (12.7 cm per min.); the test was run at room temperature with a 1kN load cell. The force required to separate the silicone piece from the polycarbonate and polybutylene terephthalate blend coupon was recorded. For each example, the average value of the 14 samples was reported. The results for Examples 2 and 3 and Control Examples A and B are shown in Table 1, below.

**Table 1**

| Example | Wt. % SSQ in thermoplastic | Separation Force |
|---|---|---|
| Control A | 0 | 76.3 lb (339 N) |
| 2 | 1 | 92.75 lb (413 N) |
| Control B | 0 | 68.8 lb (306 N) |
| 3 | 1 | 77.3 lb (344 N) |

This disclosure is not limited to the above-described embodiments but is to be controlled by the limitations set forth in the following claims and any equivalents thereof. This disclosure may be suitably practiced in the absence of any element not specifically disclosed herein.

## Claims

1. A composition comprising:
a non-fluorinated thermoplastic; and
a branched silsesquioxane polymer comprising terminal -Si(R³)₃ groups and units represented by formula: 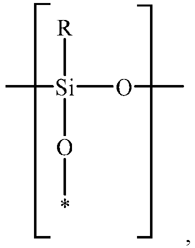
wherein
* represents a bond to another silicon atom in the branched silsesquioxane polymer;
each R is independently an organic group comprising an aliphatic carbon-carbon double bond; and each R³ is independently a non-hydrolyzable group with the proviso that one R³ may be hydrogen.

2. The composition of claim 1, wherein the branched silsesquioxane polymer further comprises units represented by formula: 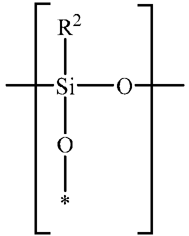 wherein.
* represents a bond to another silicon atom in the branched silsesquioxane polymer; and
each R² is independently hydrogen, alkyl, aryl, or alkylene at least one of interrupted or terminated by arylene or heterocyclylene, wherein alkyl and alkylene at least one of interrupted or terminated by arylene or heterocyclylene are unsubstituted or substituted with halogen and optionally interrupted by at least one catenated -O-, and wherein aryl, arylene, and heterocyclylene are unsubstituted or substituted by at least one alkyl, alkoxy, halogen, or combination thereof.

3. The composition of claim 1 or 2, wherein each R is independently represented by -Y-Z, wherein Y is a bond, alkylene, arylene, or alkylene at least one of interrupted or terminated by arylene, and wherein Z is -CH=CH₂, -O-CH=CH₂, -O-C(O)-CH=CH₂, -O-C(O)-C(CH₃)=CH₂, -NR'-C(O)-CH=CH₂, or -NR'-C(O)-C(CH₃)=CH₂, wherein R' is hydrogen or alkyl having up to four carbon atoms.

4. The composition of any one of claims 1 to 3, wherein each R³ is independently alkyl having up to four carbon atoms or phenyl.

5. The composition of any one of claims 1 to 4, wherein the non-fluorinated thermoplastic comprises at least one of a polyamide, a polycarbonate, or a polyester.

6. The composition of any one of claims 1 to 5, wherein the branched silsesquioxane polymer is present in the composition in a range from 0.1 percent by weight to 2 percent by weight, based on the total weight of the composition.

7. An article comprising a first composition comprising a non-fluorinated thermoplastic in contact with a second composition comprising a silicone, wherein at least the first composition comprises a branched silsesquioxane polymer comprising terminal -Si(R³)₃ groups and units represented by formula: 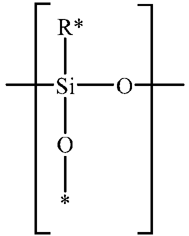 wherein
* represents a bond to another silicon atom in the branched silsesquioxane polymer;
each R* is independently an organic group comprising an aliphatic carbon-carbon double bond or an organic group comprising a carbon-silicon bond or carbon-carbon bond between the branched silsesquioxane polymer and the silicone or another R* group in the branched silsesquioxane polymer; and
each R³ is independently a non-hydrolyzable group with the proviso that one R³ may be hydrogen.

8. The article of claim 7, wherein the branched silsesquioxane polymer further comprises units represented by formula: 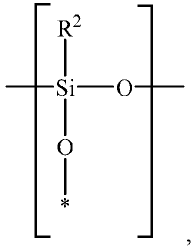 wherein.
* represents a bond to another silicon atom in the branched silsesquioxane polymer; and
each R² is independently hydrogen, alkyl, aryl, or alkylene at least one of interrupted or terminated by arylene or heterocyclylene, wherein alkyl and alkylene at least one of interrupted or terminated by arylene or heterocyclylene are unsubstituted or substituted with halogen and optionally interrupted by at least one catenated -O-, and wherein aryl, arylene, and heterocyclylene are unsubstituted or substituted by at least one alkyl, alkoxy, halogen, or combination thereof.

9. The article of claim 7 or 8, wherein each R* is independently represented by -Y-Z, wherein Y is a bond, alkylene, arylene, or alkylene at least one of interrupted or terminated by arylene, and wherein Z is -CH=CH₂, -CH₂-CH=CH₂, -O-CH=CH₂, -O-C(O)-CH=CH₂, -O-C(O)-C(CH₃)=CH₂, -NR'-C(O)-CH=CH₂, or -NR'-C(O)-C(CH₃)=CH₂, or a reaction product thereof, wherein R' is hydrogen or alkyl having up to four carbon atoms.

10. The article of any one of claims 7 to 9, wherein each R³ is independently alkyl having up to four carbon atoms or phenyl.

11. The article of any one of claims 7 to 10, wherein the non-fluorinated thermoplastic comprises at least one of a polyamide, a polycarbonate, or a polyester.

12. The article of any one of claims 7 to 11, wherein the silicone comprises a thermoset, hydrosilylation-cured silicone polymer that shares at least one of a carbon-silicon or carbon-carbon bond with the branched silsesquioxane polymer.

13. The article of any one of claims 7 to 12, wherein the article is a dual-molded article comprising a first molded piece comprising the first composition bonded to a second molded piece comprising the second composition.

14. The article of claim 13, wherein the first molded piece and the second molded piece are components of a facepiece of a respirator.

15. A process for making a dual-molded article, the process comprising:
molding the composition of any one of claims 1 to 6 to form a first molded piece; and
molding a thermosetting, hydrosilylation-curable silicone polymer to form a second molded piece while a portion of a surface of the thermosetting, hydrosilylation-curable silicone polymer is in contact with a portion of a surface of the first molded piece.
wherein during the molding of the second molded piece, the portion of the surface of the silicone polymer that is in contact with the portion of the surface of the first molded piece forms at least one of a carbon-silicon bond or carbon-carbon bond with the branched silsesquioxane polymer in the first molded piece.

## Patentansprüche

1. Eine Zusammensetzung, umfassend:
ein nichtfluoriertes Thermoplast; und
ein verzweigtes Silsesquioxanpolymer, umfassend terminale -Si(R³)₃-Gruppen und -Einheiten, dargestellt durch die Formel: 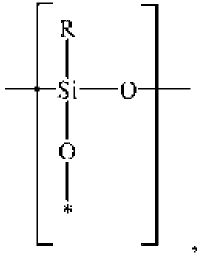
wobei
* eine Bindung mit einem anderen Siliciumatom in dem verzweigten Silsesquioxanpolymer darstellt;
jedes R unabhängig eine organische Gruppe ist, umfassend eine aliphatische Kohlenstoff-Kohlenstoff-Doppelbindung ist; und
jedes R³ unabhängig eine nicht hydrolysierbare Gruppe ist, vorausgesetzt, dass ein R³ Wasserstoff sein kann.

2. Die Zusammensetzung nach Anspruch 1, wobei das verzweigte Silsesquioxanpolymer ferner Einheiten umfasst, dargestellt durch die Formel: 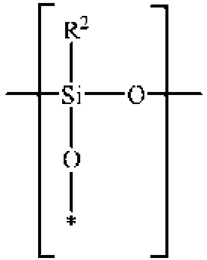 wobei:
* eine Bindung mit einem anderen Siliciumatom in dem verzweigten Silsesquioxanpolymer darstellt; und
jedes R² unabhängig Wasserstoff, Alkyl, Aryl oder Alkylen, mindestens eines von unterbrochen oder durch Arylen oder Heterocyclylen terminiert ist, wobei Alkyl und Alkylen, die mindestens eines von unterbrochen oder durch Arylen oder Heterocyclylen terminiert sind, unsubstituiert oder mit Halogen substituiert und gegebenenfalls durch mindestens ein verkettetes -O- unterbrochen, sind, und wobei Aryl, Arylen und Heterocyclylen unsubstituiert oder durch mindestens ein Alkyl, Alkoxy, Halogen oder eine Kombination davon substituiert sind.

3. Die Zusammensetzung nach Anspruch 1 oder 2, wobei jedes R unabhängig durch -Y-Z dargestellt wird, wobei Y eine Bindung, ein Alkylen, ein Arylen oder ein Alkylen ist, das mindestens eines von unterbrochen oder durch Arylen terminiert ist, und wobei Z -CH=CH₂, -O-CH=CH₂, -O-C(O)-CH=CH₂, -O-C(O)-C(CH₃)=CH₂, -NR'-C(O)-CH=CH₂ oder -NR'-C(O)-C(CH₃)=CH₂ ist, wobei R' Wasserstoff oder Alkyl, aufweisend bis zu vier Kohlenstoffatome, ist.

4. Die Zusammensetzung nach einem der Ansprüche 1 bis 3, wobei jedes R³ unabhängig Alkyl, aufweisend bis zu vier Kohlenstoffatome, oder Phenyl ist.

5. Die Zusammensetzung nach einem der Ansprüche 1 bis 4, wobei das nicht-fluorierte Thermoplast mindestens eines von einem Polyamid, einem Polycarbonat oder einem Polyester umfasst.

6. Die Zusammensetzung nach einem der Ansprüche 1 bis 5, wobei das verzweigte Silsesquioxanpolymer in der Zusammensetzung in einem Bereich von 0,1 Gew.-% bis 2 Gew.-%, bezogen auf das Gesamtgewicht der Zusammensetzung, vorhanden ist.

7. Ein Gegenstand, umfassend eine erste Zusammensetzung aus einem nichtfluorierten Thermoplast in Kontakt mit einer zweiten Zusammensetzung, umfassend ein Silikon, wobei mindestens die erste Zusammensetzung ein verzweigtes Silsesquioxanpolymer, umfassend terminale -Si(R³)₃-Gruppen und -Einheiten umfasst, dargestellt durch die Formel: 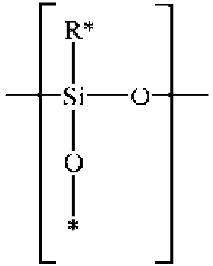 wobei
* eine Bindung mit einem anderen Siliciumatom in dem verzweigten Silsesquioxanpolymer darstellt;
jedes R* unabhängig eine organische Gruppe ist, umfassend eine aliphatische Kohlenstoff-Kohlenstoff-Doppelbindung oder eine organische Gruppe, umfassend eine Kohlenstoff-Silicium-Bindung oder eine Kohlenstoff-Kohlenstoff-Bindung zwischen dem verzweigten Silsesquioxanpolymer und dem Silicium oder einer anderen R*-Gruppe in dem verzweigten Silsesquioxanpolymer; und
jedes R³ unabhängig eine nicht hydrolysierbare Gruppe ist, vorausgesetzt, dass ein R³ Wasserstoff sein kann.

8. Der Gegenstand nach Anspruch 7, wobei das Silsesquioxanpolymer ferner Einheiten umfasst, dargestellt durch die Formel: 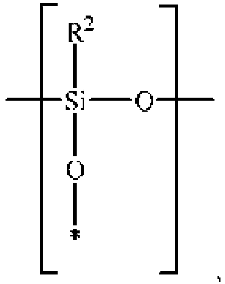 wobei:
* eine Bindung mit einem anderen Siliciumatom in dem verzweigten Silsesquioxanpolymer darstellt; und
jedes R² unabhängig Wasserstoff, Alkyl, Aryl oder Alkylen, mindestens eines von unterbrochen oder durch Arylen oder Heterocyclylen terminiert ist, wobei Alkyl und Alkylen, die mindestens eines von unterbrochen oder durch Arylen oder Heterocyclylen terminiert sind, unsubstituiert oder mit Halogen substituiert und gegebenenfalls durch mindestens ein verkettetes -O- unterbrochen, sind, und wobei Aryl, Arylen und Heterocyclylen unsubstituiert oder durch mindestens ein Alkyl, Alkoxy, Halogen oder eine Kombination davon substituiert sind.

9. Der Gegenstand nach Anspruch 7 oder 8, wobei jedes R* unabhängig durch -Y-Z dargestellt wird, wobei Y eine Bindung, ein Alkylen, ein Arylen oder ein Alkylen ist, das mindestens eines von unterbrochen oder durch Arylen terminiert ist, und wobei Z -CH=CH₂, -CH₂-CH=CH₂, -O-CH=CH₂, -O-C(O)-CH=CH₂, -O-C(O)-C(CH₃)=CH₂, -NR'-C(O)-CH=CH₂ oder -NR'-C(O)-C(CH₃)=CH₂ oder ein Reaktionsprodukt davon ist, wobei R' Wasserstoff oder Alkyl, aufweisend bis zu vier Kohlenstoffatome, ist.

10. Der Gegenstand nach einem der Ansprüche 7 bis 9, wobei jedes R³ unabhängig Alkyl, aufweisend bis zu vier Kohlenstoffatome, oder Phenyl ist.

11. Der Gegenstand nach einem der Ansprüche 7 bis 10, wobei das nicht-fluorierte Thermoplast mindestens eines von einem Polyamid, einem Polycarbonat oder einem Polyester umfasst.

12. Der Gegenstand nach einem der Ansprüche 7 bis 11, wobei das Silikon ein duroplastisches, durch Hydrosilylierung gehärtetes Silikonpolymer umfasst, das mindestens eine von einer Kohlenstoff-Silicium- oder Kohlenstoff-Kohlenstoff-Bindung mit dem verzweigten Silsesquioxanpolymer gemeinsam hat.

13. Der Gegenstand nach einem der Ansprüche 7 bis 12, wobei der Gegenstand ein zweifach spritzgegossener Gegenstand ist, umfassend ein erstes Formstück, umfassend die erste Zusammensetzung, das mit einem zweiten Formstück, umfassend die zweite Zusammensetzung, gebunden ist.

14. Der Gegenstand nach Anspruch 13, wobei das erste Formstück und das zweite Formstück Komponenten eines Gesichtsstücks eines Atemgeräts sind.

15. Ein Verfahren zum Herstellen eines zweifach spritzgegossenen Gegenstands, das Verfahren umfassend:
Formen der Zusammensetzung nach einem der Ansprüche 1 bis 6, um ein erstes Formstück auszubilden; und
Formen eines duroplastischen, durch Hydrosilylierung härtbares Silikonpolymer, um ein zweites Formstück auszubilden, während ein Abschnitt einer Oberfläche des duroplastischen, durch Hydrosilylierung härtbaren Silikonpolymers in Kontakt mit einem Abschnitt einer Oberfläche des ersten Formstücks ist,
wobei während des Formens des zweiten Formstücks der Abschnitt der Oberfläche des Silikonpolymers, der mit dem Abschnitt der Oberfläche des ersten Formstücks in Kontakt steht, mindestens eine von einer Kohlenstoff-Silicium-Bindung oder einer Kohlenstoff-Kohlenstoff-Bindung mit dem verzweigten Silsesquioxanpolymer in dem ersten Formstück ausbildet.

## Revendications

1. Composition comprenant :
un thermoplastique non fluoré ; et
un polymère de silsesquioxane ramifié comprenant des groupes terminaux -Si(R³)₃ et des motifs représentés par la formule : 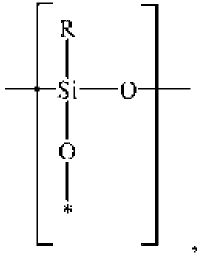
dans laquelle
* représente une liaison avec un autre atome de silicium dans le polymère de silsesquioxane ramifié ;
chaque R est indépendamment un groupe organique comprenant une double liaison carbone-carbone aliphatique ; et
chaque R³ est indépendamment un groupe non hydrolysable, à condition qu'un R³ soit un hydrogène.

2. Composition selon la revendication 1, dans laquelle le polymère de silsesquioxane ramifié comprend en outre des motifs représentés par la formule : 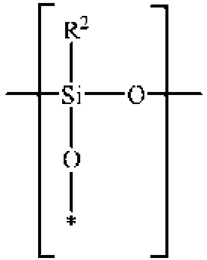 dans laquelle.
* représente une liaison avec un autre atome de silicium dans le polymère de silsesquioxane ramifié ; et
chaque R² est indépendamment hydrogène, alkyle, aryle, ou alkylène au moins interrompu ou terminé par arylène ou hétérocyclylène, dans laquelle l'alkyle et l'alkylène au moins interrompus ou terminés par arylène ou hétérocyclylène sont non substitués ou substitués par halogène et facultativement interrompus par au moins un -O- caténaire, et dans laquelle l'aryle, l'arylène et l'hétérocyclylène sont non substitués ou substitués par au moins un alkyle, alcoxy, halogène, ou une combinaison de ceux-ci.

3. Composition selon la revendication 1 ou 2, dans laquelle chaque R est indépendamment représenté par -Y-Z, dans laquelle Y est une liaison, un alkylène, arylène, ou alkylène au moins interrompu ou terminé par arylène, et dans laquelle Z est -CH=CH₂, -O-CH=CH₂, -O-C(O)-CH=CH₂, -O-C(O)-C(CH₃)=CH₂, -NR'-C(O)-CH=CH₂, ou -NR'-C(O)-C(CH₃)=CH₂, dans laquelle R' est hydrogène ou alkyle ayant jusqu'à quatre atomes de carbone.

4. Composition selon l'une quelconque des revendications 1 à 3, dans laquelle chaque R³ est indépendamment alkyle ayant jusqu'à quatre atomes de carbone ou phényle.

5. Composition selon l'une quelconque des revendications 1 à 4, dans laquelle le thermoplastique non fluoré comprend au moins l'un parmi un polyamide, un polycarbonate, ou un polyester.

6. Composition selon l'une quelconque des revendications 1 à 5, dans laquelle le polymère de silsesquioxane ramifié est présent dans la composition dans une plage allant de 0,1 pour cent en poids à 2 pour cent en poids, sur la base du poids total de la composition.

7. Article comprenant une première composition comprenant un thermoplastique non fluoré en contact avec une seconde composition comprenant un silicone, dans lequel au moins la première composition comprend un polymère de silsesquioxane ramifié comprenant des groupes terminaux -Si(R³)₃ et des motifs représentés par la formule : 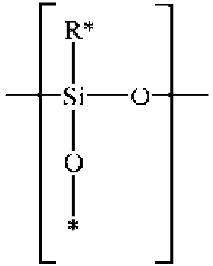 dans laquelle
* représente une liaison avec un autre atome de silicium dans le polymère de silsesquioxane ramifié ;
chaque R* est indépendamment un groupe organique comprenant une double liaison carbone-carbone aliphatique ou un groupe organique comprenant une liaison carbone-silicium ou carbone-carbone entre le polymère de silsesquioxane ramifié et le silicone ou un autre groupe R* dans le polymère de silsesquioxane ramifié ; et
chaque R³ est indépendamment un groupe non hydrolysable, à condition qu'un R³ soit un hydrogène.

8. Article selon la revendication 7, dans lequel le polymère de silsesquioxane ramifié comprend en outre des motifs représentés par la formule : 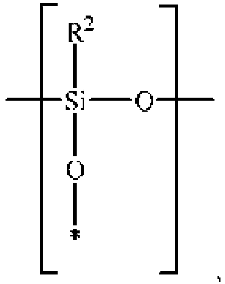 dans laquelle.
* représente une liaison avec un autre atome de silicium dans le polymère de silsesquioxane ramifié ; et
chaque R² est indépendamment hydrogène, alkyle, aryle, ou alkylène au moins interrompu ou terminé par arylène ou hétérocyclylène, dans laquelle l'alkyle et l'alkylène au moins interrompus ou terminés par arylène ou hétérocyclylène sont non substitués ou substitués par halogène et facultativement interrompus par au moins un -O- caténaire, et dans laquelle l'aryle, l'arylène et l'hétérocyclylène sont non substitués ou substitués par au moins un alkyle, alcoxy, halogène, ou une combinaison de ceux-ci.

9. Article selon la revendication 7 ou 8, dans lequel chaque R* est indépendamment représenté par -Y-Z, dans lequel Y est une liaison, un alkylène, arylène, ou alkylène au moins interrompu ou terminé par arylène, et dans lequel Z est -CH=CH₂, -CH₂-CH=CH₂, -O-CH=CH₂, -O-C(O)-CH=CH₂, -O-C(O)-C(CH₃)=CH₂, - NR'-C(O)-CH=CH₂, ou -NR'-C(O)-C(CH₃)=CH₂, ou un produit de réaction de ceux-ci, dans lequel R' est hydrogène ou alkyle ayant jusqu'à quatre atomes de carbone.

10. Article selon l'une quelconque des revendications 7 à 9, dans lequel chaque R³ est indépendamment alkyle ayant jusqu'à quatre atomes de carbone ou phényle.

11. Article selon l'une quelconque des revendications 7 à 10, dans lequel le thermoplastique non fluoré comprend au moins l'un parmi un polyamide, un polycarbonate, ou un polyester.

12. Article selon l'une quelconque des revendications 7 à 11, dans lequel le silicone comprend un polymère de silicone thermodurcissable, durci par hydrosilylation, qui partage au moins une liaison carbone-silicium ou carbone-carbone avec le polymère de silsesquioxane ramifié.

13. Article selon l'une quelconque des revendications 7 à 12, dans lequel l'article est un article à double moulage comprenant une première pièce moulée comprenant la première composition liée à une seconde pièce moulée comprenant la seconde composition.

14. Article selon la revendication 13, dans lequel la première pièce moulée et la seconde pièce moulée sont des composants d'un élément facial d'un respirateur.

15. Procédé de fabrication d'un article à double moulage, le procédé comprenant :
le moulage de la composition selon l'une quelconque des revendications 1 à 6 afin de former une première pièce moulée ; et
le moulage d'un polymère de silicone thermodurcissable, durcissable par hydrosilylation afin de former une seconde pièce moulée pendant qu'une partie d'une surface du polymère de silicone thermodurcissable, durcissable par hydrosilylation est en contact avec une partie d'une surface de la première pièce moulée,
dans lequel, pendant le moulage de la seconde pièce moulée, la partie de la surface du polymère de silicone qui est en contact avec la partie de la surface de la première pièce moulée forme au moins une liaison carbone-silicium ou carbone-carbone avec le polymère de silsesquioxane ramifié dans la première pièce moulée.
